# EUROPÄISCHE PATENTSCHRIFT

(11) **EP 4 366 994 B1**
(45) Veröffentlichungstag und Bekanntmachung des Hinweises auf die Patenterteilung: **24.09.2025**
(21) Anmeldenummer: 22738674.5
(22) Anmeldetag: 05.07.2022
(51) Int. Cl.: B60T 13/68, B60T 13/04, B60T 17/22

(54) **ELEKTROPNEUMATISCHE VENTILANORDNUNG MIT SELBSTHALTENDEM SICHERHEITSVENTIL**
ELECTROPNEUMATIC VALVE ASSEMBLY WITH SELF-LOCKING SAFETY VALVE
ENSEMBLE SOUPAPE ÉLECTROPNEUMATIQUE DOTÉ D'UNE SOUPAPE DE SÉCURITÉ À VERROUILLAGE AUTOMATIQUE

(30) Priorität: 05.07.2021 DE 102021117210
(43) Veröffentlichungstag der Anmeldung: 15.05.2024
(73) Patentinhaber: ZF CV Systems Global GmbH, 3006 Bern (CH)
(72) Erfinder: KLOSTERMANN, Thilo, 30890 Barsinghausen (DE); OTREMBA, Robert, 30952 Ronnenberg (DE); VAN THIEL, Julian, 30938 Grossburgwedel (DE)
(74) Vertreter: Rabe, Dirk-Heinrich
(86) Internationale Anmeldenummer: PCT/EP2022/068603
(87) Internationale Veröffentlichungsnummer: WO 2023/280864

(56) Entgegenhaltungen:
- DE-A1- 102017 007 781
- DE-A1- 102019 125 747
- DE-A1- 102019 130 762

## Beschreibung

Die Erfindung betrifft eine elektropneumatische Ventilanordnung zur Betätigung einer Feststellbremsfunktion eines elektropneumatischen Bremssystems eines Nutzfahrzeugs, mit einer Vorsteuereinheit, die in Abhängigkeit von einem elektronischen Feststellbremssignal einen Vorsteuerdruck aussteuert; und einer Hauptventileinheit, die dazu angepasst ist, den Vorsteuerdruck zu empfangen und einen Parkbremsdruck an wenigsten einem Federspeicheranschluss auszusteuern. Ferner betrifft die Erfindung ein elektropneumatisches Bremssystem, ein Verfahren zum Steuern einer Parkbremsfunktion eines Fahrzeugs und ein Fahrzeug.

Elektropneumatische Ventilanordnungen zum Betätigen einer Feststellbremsfunktion werden sowohl im europäischen als auch im US-amerikanischen Raum eingesetzt. Eine Feststellbremsfunktion eines elektropneumatischen Bremssystems nutzt in der Regel sogenannte Federspeicherbremszylinder, die aufgrund einer Federkraft zuspannen und im belüfteten Zustand geöffnet sind. Während der Fahrt sollen dieser Federspeicherbremszylinder also belüftet und damit gelöst sein, während sie im geparkten Zustand des Fahrzeugs entlüftet werden und damit zuspannen.

Die Federspeicherbremszylinder können mit Betriebsbremszylindern kombiniert werden, so dass die Federspeicherbremsen und Betriebsbremsen auf die gleichen Bremskolben wirken. Durch geeignete konstruktive Maßnahmen kann eine mechanische Überlastung der Bremskolben durch die Addition der Bremskräfte von Betriebsbremse und Federspeicherbremse vermieden werden. Sollten die Betriebsbremsen bei zugespannten Feststellbremsen betätigt werden, werden die Federspeicherbremszylinder gleichzeitig belüftet, um eine Addition der Bremskräfte zu vermeiden. Diese Funktionalität wird häufig als Anti-Compound-Funktion bezeichnet.

Aufgrund gesetzlicher Vorgaben müssen elektropneumatische Feststellbremsen im Fehlerfall ein Verbleiben in der momentanen Schaltstellung gewährleisten. Im US-amerikanischen Raum wird zusätzlich ein automatisches und dauerhaftes Aktivieren der Feststellbremse gefordert, wenn ein Vorratsdruck der Feststellbremse einen vordefinierten Grenzwert unterschreitet. In pneumatischen Systemen werden zum Realisieren dieser Funktionalität sogenannte Push-Pull-Ventile in der Fahrerkabine eingesetzt, über die der Fahrer manuell die Belüftung bzw. Entlüftung der Federspeicherbremszylinder bewirken kann. Wird das Push-Pull-Ventil hineingedrückt, wird eine pneumatische Verbindung hergestellt, sodass die Federspeicherbremszylinder des Zugfahrzeugs belüftet und damit gelöst werden. Zieht der Fahrer hingegen das Push-Pull-Ventil heraus, werden die Federspeicherbremszylinder entlüftet und spannen zu. Ferner sind die Push-Pull-Ventile dazu angepasst automatisch herauszuspringen, wenn der Vorratsdruck den Grenzwert unterschreitet.

Da die Fahrer entsprechender Fahrzeuge an diese Funktionalität gewöhnt sind, soll ein entsprechendes Verhalten auch für elektropneumatische realisierte Feststellbremsfunktionen verwirklicht werden. Ferner ist der Aufwand der pneumatischen Verrohrung von Ventilen, die die Parkbremsfunktion umsetzen, den Federspeicherbremszylindern, die üblicherweise an der Hinterachse vorgesehen sind, sowie der Fahrerkabine relativ hoch. Es besteht daher ein Bedarf, dies zu vereinfachen. Ferner besteht der Bedarf, die Sicherheit der Feststellbremsfunktion zu verbessern. Des Weiteren ist erwünscht, dass die Feststellbremse im Falle einer elektrischen Störung auch pneumatisch gelöst werden kann.

Die DE102019125747A1 betrifft eine elektropneumatische Parkbremsventileinheit für ein elektronisch gesteuertes pneumatisches Bremssystem eines Fahrzeugs, mit wenigstens einem Vorratsanschluss zum Empfangen von Vorratsdruck, wenigstens einem Federspeicheranschluss zum Anschließen von Federspeicherbremszylindern des Fahrzeugs, einer Feststellbremsventilanordnung (10) mit einem Bistabilventil, wobei in Abhängigkeit von der Schaltung des ersten Bistabilventils ein Federspeicherbremsdruck an dem Federspeicheranschluss aussteuerbar ist. Die elektropneumatische Parkbremsventileinheit weist ein pneumatisch schaltbares Halteventil mit einem Halteventil-Steueranschluss auf, das zwischen den ersten Vorratsanschluss und das Bistabilventil geschaltet und federbelastet in eine erste Schaltstellung vorgespannt ist, in welcher das Bistabilventil mit einer Entlüftung verbunden ist, und bei Überschreiten eines ersten Schwellwerts durch einen am Halteventil-Steueranschluss bereitgestellten ersten Steuerdrucks in eine zweite Schaltstellung schaltet, in der das Bistabilventil zum Empfang von Vorratsdruck mit dem ersten Vorratsanschluss verbunden ist.

Diese Aufgabe wird in einem ersten Aspekt der Erfindung bei einer elektropneumatischen Ventilanordnung der eingangs genannten Art durch die Merkmale des Anspruchs 1 gelöst. Die elektropneumatische Ventilanordnung zeichnet sich durch einen Betriebsbremsanschluss zum Empfangen eines Betriebsbremsdrucks und ein pneumatisch schaltbares selbsthaltendes Sicherheitsventil, welches der Vorsteuereinheit vorgeschaltet ist und einen Sicherheitsventilsteueranschluss zum Empfangen eines Sicherheitssteuerdrucks sowie einen Sicherheitsventilhaltekreis zum Empfangen eines von dem Sicherheitsventil ausgesteuerten Drucks oder eines davon abgeleiteten Drucks aus. Das Sicherheitsventil ist durch Empfangen des Sicherheitssteuerdrucks von einer Entlüftungsstellung, in der das Sicherheitsventil die Vorsteuereinheit mit einer Entlüftung verbindet, in eine Versorgungsstellung schaltbar, in der das Sicherheitsventil die Vorsteuereinheit mit Vorratsdruck versorgt, wobei das Sicherheitsventil in Abhängigkeit vom am Sicherheitsventilhaltekreis empfangenen ausgesteuerten Druck in der Versorgungsstellung verbleibt oder in die Entlüftungsstellung schaltet. Der Betriebsbremsanschluss ist unmittelbar oder mittelbar fluidleitend mit dem Sicherheitsventilsteueranschluss verbunden.

Das Schalten des Sicherheitsventils von der Entlüftungsstellung in die Versorgungsstellung erfolgt durch Empfangen des Sicherheitssteuerdrucks am Sicherheitsventilsteueranschluss. In dieser Versorgungsstellung verbleibt das Sicherheitsventil in Abhängigkeit von dem Druck, der am Sicherheitsventil ausgesteuert wird und so auch am Sicherheitsventilhalteanschluss anliegt. Auf diese Weise kann erreicht werden, dass die Vorsteuereinheit nur dann mit Vorratsdruck versorgt wird, wenn das Sicherheitsventil in der Versorgungsstellung ist. Das Sicherheitsventil hält sich selbst in der Versorgungsstellung, wenn der vom Sicherheitsventil ausgesteuerte Druck an späterer Stelle weiter definierte Anforderungen erfüllt. Durch das Sicherheitsventil ist eine selbsttätige Sicherheitsfunktion in die elektropneumatische Ventilanordnung integriert und diese muss nicht durch ein aufwändig zu verrohrendes externes Ventil gewährleistet werden.

Erfindungsgemäß wird die Schaltstellung des Magnetventils nicht nur von der über den Sicherheitsventilsteueranschluss eingestellten Schaltstellung abhängig gemacht, sondern auch von dem Druck, der am Sicherheitsventil ausgesteuert wird. Hierdurch wird eine weitere Sicherheitsebene bereitgestellt. Dies kann pneumatisch, mechanisch oder auf sonstige Weise erfolgen. Vorzugsweise erfolgt dies unabhängig von einer Bestromung.

Die mittelbare oder unmittelbare Verbindung des Sicherheitsventilsteueranschlusses mit dem Betriebsbremsanschluss erlaubt, dass das Sicherheitsventil durch Bereitstellen eines Betriebsbremsdrucks schaltbar ist. Erfindungsgemäß kann das Sicherheitsventil auch dann in die Versorgungsstellung gebracht werden, wenn ein elektrischer Fehler der elektropneumatischen Ventilanordnung vorliegt, und erlaubt so beispielsweise ein Lösen der Feststellbremse zum Bergen des Fahrzeugs. Eine unmittelbare Verbindung zwischen Sicherheitssteueranschluss und Betriebsbremsanschluss liegt dann vor, wenn der Sicherheitssteueranschluss und der Betriebsbremsanschluss ohne weitere funktionale Elemente miteinander verbunden sind. Beispielsweise können die Anschlüsse durch eine direkte Leitung oder Verrohrung miteinander verbunden sein. Eine unmittelbare Verbindung kann auch dann vorliegen, wenn Verteiler zwischen den beiden Elementen angeordnet sind. Eine mittelbare Verbindung von Sicherheitssteueranschluss und Betriebsbremsanschluss liegt dann vor, wenn weitere funktionale Elemente, wie beispielsweise Ventile, zwischen dem Sicherheitssteueranschluss und dem Betriebsbremsanschluss angeordnet sind. Es soll verstanden werden, dass auch eine mittelbare Verbindung ein direktes und (zumindest in bestimmten Betriebsfällen) im Wesentlichen unverändertes Bereitstellen (mit Ausnahme gängiger Leitungsverluste) des Betriebsbremsdrucks an dem Sicherheitsventilsteueranschluss erlaubt.

In einer ersten bevorzugten Ausführungsform ist der Betriebsbremsanschluss mit einem Vorderachsbremskreis und/oder einem Hinterachsbremskreis verbindbar, wobei der Betriebsbremsdruck ein Vorderachsbremsdruck und/oder ein Hinterachsbremsdruck des Nutzfahrzeugs ist. Durch die unmittelbare oder mittelbare fluidleitende Verbindung zwischen Sicherheitsventilsteueranschluss und Betriebsbremsanschluss kann der Vorderachsbremsdruck und/oder der Hinterachsbremsdruck bereitgestellt werden. Es kann auch vorgesehen sein, dass ein von dem Vorderachsbremsdruck und/oder dem Hinterachsbremsdruck abgeleiteter Druck an dem Sicherheitsventilsteueranschluss an dem Sicherheitsventilsteueranschluss bereitgestellt wird. Dies ermöglicht das Nutzen eines Vorder- und/oder Hinterachsbremsdrucks, der bereits in einem Bremssystem vorhandenen ist, um das Sicherheitsventil zu schalten, wodurch die Ventilanordnung kompakt und kostengünstig ausgebildet werden kann. Ferner können in einem Bremssystem, das eine erfindungsgemäße Ventilanordnung aufweist, Komponenten und Leitungen eingespart werden.

Vorzugsweise ist der Betriebsbremsanschluss ein Lösesteueranschluss, wobei der Betriebsbremsdruck eine Lösesteuerdruck ist. Am Lösesteueranschluss kann vorzugsweise der Lösesteuerdruck bereitgestellt werden, der vorzugsweise dazu dient, die Federspeicherbremszylinder eines Fahrzeugs zu belüften beziehungsweise dazu, dass an einem Federspeicheranschluss der elektropneumatischen Ventilanordnung ein entsprechender Parkbremsdruck bereitstellbar ist (Anti-Compound-Funktion). In dieser bevorzugten Ausgestaltung erfüllt der Betriebsbremsdruck der elektropneumatischen Ventilanordnung eine Doppelfunktion. So dient der als Lösesteuerdruck ausgebildete Betriebsbremsdruck bei Bedarf zum Schalten des Sicherheitsventils und erfüllt ferner die eingangs beschriebene Anti-Compound-Funktion. Die elektropneumatische Ventilanordnung kann so besonders kompakt, einfach und kostengünstig ausgestaltet werden.

Vorzugsweise weist die elektropneumatische Ventilanordnung ferner ein Hauptsteuerwechselventil auf, das dazu ausgebildet ist, den Vorsteuerdruck und den Lösesteuerdruck zu empfangen und den höheren des Vorsteuerdrucks und Lösesteuerdrucks für die Hauptventileinheit bereitzustellen, wobei die Hauptventileinheit in Abhängigkeit des Lösesteuerdrucks oder des Vorsteuerdrucks den Parkbremsdruck aussteuert. Das Hauptsteuerwechselventil stellt entweder den Vorsteuerdruck oder den Lösesteuerdruck an der Hauptventileinheit bereit. Die Hauptventileinheit ist dazu angepasst, in Abhängigkeit von dem jeweils empfangenen Druck (dem Vorsteuerdruck oder dem Lösesteuerdruck) den Parkbremsdruck an dem Federspeicheranschluss auszusteuern. Das Hauptsteuerwechselventil ermöglicht also, dass der von der Vorsteuereinheit in Abhängigkeit vom elektronischen Feststellbremssignal ausgesteuerte Vorsteuerdruck durch den am Lösesteueranschluss bereitgestellten Lösesteuerdruck überstimmt wird und umgekehrt. So kann ein doppeltes Bremsen des Fahrzeugs durch zeitgleiches Betätigen der Feststellbremse und der Betriebsbremse verhindert werden.

In einer alternativen Ausgestaltung ist der Betriebsbremsanschluss ein Redundanzanschluss, wobei der Betriebsbremsdruck ein Redundanzbremsdruck oder ein von dem Redundanzbremsdruck abgeleiteter Druck ist. Auch in dieser Ausgestaltung wird eine vorteilhafte Doppelnutzung des am Betriebsbremsanschluss bereitgestellten Drucks erreicht. Ein in einem Redundanzfall zum Bremsen ausgesteuerte Druck wird ferner zum Schalten des Sicherheitsschaltventils genutzt. Wie auch die vorgenannte erste alternative Ausgestaltung erlaubt diese Variante eine kostengünstige und einfache Bauweise der elektropneumatischen Ventilanordnung und/oder eines Bremssystems. In einer Variante wird der Redundanzdruck unmittelbar als Betriebsbremsdruck am Sicherheitsventilsteueranschluss bereitgestellt. Alternativ oder ergänzend kann aber auch vorgesehen sein, dass ein von dem Redundanzdruck abgeleiteter Druck am Sicherheitsventilsteueranschluss bereitgestellt wird. So kann zum Ableiten des Betriebsbremsdrucks aus dem Redundanzdruck zwischen dem Redundanzanschluss und dem Sicherheitsventilsteueranschluss vorzugsweise eine sekundäre Steuereinheit angeordnet sein. Besonders bevorzugt ist die sekundäre Steuereinheit eine Anhängersteuereinheit, die dazu ausgebildet ist einen Anhängerbremsdruck auszusteuern. Die elektropneumatische Ventilanordnung ist dann vorzugsweise dazu ausgebildet den Anhängerbremsdruck auszusteuern und am Anhängerbetriebsbremsanschluss bereitzustellen. So kann die elektropneumatische Ventilanordnung vorzugsweise ein Anhängersteuerventil sein oder ein Anhängersteuerventil als Teilfunktion umfassen. In einem Bremssystem wird der Redundanzdruck vorzugsweise von einem Bremswertgeber, wie beispielsweise einem Fußbremsmodul, bereitgestellt. Beispielsweise kann in einem Bremssystem eines teilautonomen oder autonomen Fahrzeugs der Betriebsbremsdruck basierend auf elektrischen Signalen einer zentralen Steuereinheit weitgehend autonom bereitgestellt werden, während ein Fahrer über das Fußbremsmodul einen Redundanzdruck bereitstellen kann, um das Fahrzeug im Fehlerfall zu bremsen.

In einer alternativen bevorzugten Ausgestaltung ist der Betriebsbremsanschluss ein Anhängerbetriebsbremsanschluss, wobei der Betriebsbremsdruck ein Anhängerbremsdruck ist. In dieser Variante wird der Anhängerbremsdruck durch eine externe Einheit, die nicht Teil der elektropneumatischen Ventilanordnung ist, an der elektropneumatischen Ventilanordnung bereitgestellt. Beispielsweise kann die externe Einheit eine herkömmliche mit der elektropneumatischen Ventilanordnung pneumatisch verbundene Anhängersteuereinheit sein. Auch in diesem Fall ergibt sich die bereits mit Bezug zur vorstehenden Alternative beschrieben vorteilhafte Doppelnutzung, wobei der Anhängerbremsdruck nicht durch die elektropneumatische Ventilanordnung, sondern von der externen Einheit für den Anhänger und die elektropneumatische Ventilanordnung bereitgestellt wird.

Gemäß der vorliegenden Erfindung weist die elektropneumatische Ventilanordnung ferner eine elektropneumatische Sicherheitsschalteinheit auf, die in Abhängigkeit von einem elektronischen Sicherheitsschaltsignal einen Sicherheitsvorsteuerdruck aussteuert. Vorzugsweise ist die Sicherheitsschalteinheit fluidleitend mit dem Sicherheitsventilsteueranschluss verbunden, um den Sicherheitsvorsteuerdruck als Sicherheitssteuerdruck an dem Sicherheitsventilsteueranschluss bereitzustellen. Die Verbindung kann unmittelbar oder mittelbar ausgebildet sein. Beispielsweise kann die Sicherheitsschalteinheit unmittelbar mit dem Sicherheitsventilsteueranschluss verbunden sein, wobei zwischen der Sicherheitsschalteinheit und dem Sicherheitsventilsteueranschluss ein Verteiler angeordnet ist, der auch den Betriebsbremsanschluss unmittelbar oder mittelbar mit dem Sicherheitsventilsteueranschluss verbindet. Wenn sowohl der Betriebsbremsanschluss als auch die Sicherheitsschalteinheit unmittelbar mit dem Sicherheitsventilsteueranschluss verbunden sind, dann ist der Sicherheitssteuerdruck gegebenenfalls ein Ausgleichsdruck von Sicherheitsvorsteuerdruck und Betriebsbremsdruck, der sich einstellt, wenn sowohl der Sicherheitsvorsteuerdruck und der Betriebsbremsdruck wirken. Vorzugsweise kann die Sicherheitsschalteinheit aber auch mittelbar mit dem Sicherheitsventilsteueranschluss verbunden sein. Die Sicherheitsschalteinheit ist bevorzugt ein elektrisch schaltbares 3/2-WegeVentil.

Gemäß der vorliegenden Erfindung weist die elektropneumatische Ventilanordnung ferner ein Sicherheitswechselventil auf, das dazu ausgebildet ist, den Sicherheitsvorsteuerdruck und den Betriebsbremsdruck zu empfangen und den höheren des Sicherheitsvorsteuerdrucks und Betriebsbremsdrucks Druck als Sicherheitssteuerdruck auszusteuern. Wenn sowohl ein Betriebsbremsdruck als auch ein Sicherheitsvorsteuerdruck am Sicherheitswechselventil bereitgestellt werden, bildet der höhere dieser beiden Drücke, der Sicherheitssteuerdruck. Das Bereitstellen des Sicherheitssteuerdrucks ist dann bevorzugt auf zwei Arten möglich. Einerseits kann mittels der elektropneumatischen Sicherheitsschalteinheit in Abhängigkeit von Sicherheitsschaltsignalen der Sicherheitsvorsteuerdruck bereitgestellt werden und andererseits kann der Betriebsbremsdruck als Sicherheitssteuerdruck dienen. Das Sicherheitswechselventil verhindert ein mehrfaches Beaufschlagen des Sicherheitsventilsteueranschlusses und so ein mechanisches Überlasten.

Bevorzugt ist die Sicherheitsschalteinheit zum Empfangen eines Vorratsdrucks und in einer ersten Schaltstellung zum Aussteuern des Vorratsdrucks als Sicherheitsvorsteuerdruck ausgebildet. Es ist bevorzugt, dass die Sicherheitsschalteinheit mit einem Vorratsanschluss fluidleitend verbunden ist. So kann über einen Vorratsanschluss Luft mit einem Vorratsdruck an der Sicherheitsschalteinheit bereitgestellt werden.

In einer bevorzugten Weiterbildung verbindet die Sicherheitsschalteinheit in einer zweiten Schaltstellung das Sicherheitswechselventil mit einer Entlüftung. Es kann vorzugsweise auch vorgesehen sein, dass die Sicherheitsschalteinheit in der zweiten Schaltstellung den Sicherheitsventilsteueranschluss mit der Entlüftung verbindet, wenn der Sicherheitsschalteinheit unmittelbar mit dem Sicherheitsventilsteueranschluss verbunden ist. Im Allgemeinen weist der Vorratsdruck in einem Bremssystem das höchste Druckniveau auf. In diesem Fall kann über die Sicherheitsschalteinheit ein zuverlässiges Schalten erreicht werden. Wenn die Sicherheitsschalteinheit durch bestromen (wenn Sicherheitsschaltsignal bereitgestellt werden) in die erste Schaltstellung geschaltet ist, wird der Vorratsdruck unmittelbar am Sicherheitsventilsteueranschluss oder am Sicherheitswechselventil bereitgestellt, das den Vorratsdruck dann wiederum als Sicherheitssteuerdruck am Sicherheitsventilsteueranschluss bereitstellt. Wenn die Sicherheitsschalteinheit hingegen in der zweiten Schaltstellung ist, wird im Falle einer unmittelbaren Verbindung ein Schalten des Sicherheitsventils verhindert, da der Sicherheitsventilsteueranschluss mit der Entlüftung verbunden ist. Im Fall einer mittelbaren Verbindung über das Sicherheitswechselventil ist ein Schalten des Sicherheitsventils weiterhin möglich, aber nur, wenn der Betriebsbremsdruck bereitgestellt wird. Vorzugsweise ist die Sicherheitsschalteinheit eine monostabile Sicherheitsschalteinheit, die besonders bevorzugt in die zweite Schaltstellung vorgespannt ist.

In einer bevorzugten Ausführungsform verbleibt das Sicherheitsventil in der Versorgungsstellung, wenn der am Sicherheitsventilhaltekreis anliegende ausgesteuerte Druck einen ersten Schwellwert überschreitet, und schaltet in die Entlüftungsstellung, wenn der am Sicherheitsventilhaltekreis anliegende ausgesteuerte Druck den ersten Schwellwert erreicht oder unterschreitet. Das Sicherheitsventil schaltet in Abhängigkeit vom ausgesteuerten Druck. Wenn der ausgesteuerte Druck über dem ersten Schwellwert liegt, dann hält sich das Sicherheitsventil mittels des am Sicherheitsventilhaltekreis empfangenen Drucks selbst in der Versorgungsstellung. Wenn hingegen der ausgesteuerte Druck unter dem ersten Schwellwert liegt schaltet das Sicherheitsventil in die Entlüftungsstellung. In diesem Fall wird kein Vorratsdruck an der Vorsteuereinheit bereitgestellt und der Parkbremsdruck kann gegebenenfalls nur noch ausgesteuert werden, wenn die Hauptventileinheit einen anderen Druck (beispielsweise den Betriebsbremsdruck) empfängt. Es kann vorzugsweise auch vorgesehen sein, dass das Sicherheitsventil in die Entlüftungsstellung schaltet, wenn der am Sicherheitsventilhaltekreis anliegende ausgesteuerte Druck den ersten Schwellwert unterschreitet. Der Sicherheitsventilhaltekreis kann ein vom Sicherheitsventil externer Kreis sein oder intern am Sicherheitshalteventil ausgebildet sein. So kann das Sicherheitsventil beispielsweise einen inneren Kanal aufweisen, der einen mit der Vorsteuereinheit verbunden Sicherheitsventilanschluss rückkoppelt. Es kann aber vorzugsweise auch eine externe Leitung den mit der Vorsteuereinheit verbundenen Anschluss des Sicherheitsventils mit einem Sicherheitsventilhalteanschluss verbinden.

Vorzugsweise liegt der erste Schwellwert in einem Bereich von 150 kPa bis 450 kPa, bevorzugt von 170 kPa bis 450 kPa, bevorzugt 170 kPa bis 420 kPa, bevorzugt 180 kPa bis 420 kPa, bevorzugt 180 kPa bis 400 kPa, bevorzugt, 200 kPa bis 400 kPa, bevorzugt 200 kPa bis 380 kPa, bevorzugt 200 kPa bis 370 kPa, bevorzugt 200 kPa bis 350 kPa, bevorzugt 200 kPa bis 320 kPa, bevorzugt 200 kPa bis 300 kPa, bevorzugt 210 kPa bis 300 kPa, bevorzugt 210 kPa bis 280 kPa, bevorzugt 220 kPa bis 280 kPa, bevorzugt 230 kPa bis 280 kPa, besonders bevorzugt 250 kPa bis 315 kPa,

In einer bevorzugten Weiterbildung weist das Sicherheitsventil eine Spannfeder auf, die das Sicherheitsventil in die Entlüftungsstellung vorspannt. In einem drucklosen Zustand nimmt das Sicherheitsventil, angetrieben durch die Spannfeder, die Entlüftungsstellung ein. Um das Sicherheitsventil in die Versorgungsstellung zu schalten, muss eine von der Spannfeder bereitgestellte Rückstellkraft überwunden werden. Besonders bevorzugt bestimmt die Rückstellkraft der Spannfeder den ersten Schwellwert.

Vorzugsweise ist die Vorsteuereinheit eine bistabile Vorsteuereinheit. Die bistabile Vorsteuereinheit ist in zwei Schaltzuständen stabil, verbleibt also auch für den Fall das die elektropneumatische Ventilanordnung stromlos geschaltet wird in demjenigen Schaltzustand in den diese vor dem Eintreten des stromlosen Zustands geschaltet war. So behält die Vorsteuereinheit ihre Schaltstellung bei und nach dem erneuten Bestromen der elektropneumatischen Ventilanordnung herrscht ein Zustand, der vorzugsweise identisch zu einem Zustand ist, der vor der Unterbrechung der Stromversorgung bestand. Ein ungewolltes Einlegen und/oder Lösen der Feststellbremse beim erneuten Bestromen der elektropneumatischen Ventilanordnung wird verhindert.

Bevorzugt weist die bistabile Vorsteuereinheit ein bistabiles elektromagnetisches Magnetventil mit wenigstens einem ersten Permanentmagneten auf. Der Permanentmagnet hält das bistabile elektromagnetische Magnetventil auch im stromlosen Zustand in einer Raststellung. Vorzugsweise weist das bistabile elektromagnetische Magnetventil ferner eine erste Spule auf. Durch Bestromen der ersten Spule kann ein Anker des Magnetventils, der vorzugsweise den Permanentmagneten enthält in die erste Raststellung gebracht werden. Vorzugsweise weist das bistabile elektromagnetische Magnetventil ferner einen zweiten Permanentmagneten und/oder eine zweite Spule auf, die besonders bevorzugt analog zum ersten Permanentmagneten und zur ersten Spule ausgebildet sind. So kann das bistabile elektromagnetische Magnetventil vorzugsweise in zwei Rastellungen magnetisch verrasten. Wenn dann keine andere Kraft auf den Anker wirkt oder dieser in den Stellungen mechanisch und/oder magnetisch verrastbar ist, ist die jeweilige Schaltstellung stabil, da sie ohne weiteres Bestromen aufrechterhalten bleiben kann.

In einem zweiten Aspekt löst die Erfindung die eingangs genannte Aufgabe mit einem elektropneumatischen Bremssystem nach Anspruch 14.

Ein elektropneumatisches Bremssystem ist zumindest teilweise mittels elektrischer Signale steuerbar. So kann beispielsweise in einem vollständig oder teilweise autonomen Fahrbetrieb eine Bremsfunktion durch Bremssignale gesteuert werden, die von einer zentralen Steuereinheit bereitgestellt werden. Das Bremsmodul kann vorzugsweise ein elektropneumatisches Bremsmodul, insbesondere ein elektropneumatisches Fußbremsmodul, ein manuelles Bremsmodul, insbesondere ein herkömmliches pneumatisches Fußbremsmodul, oder ein elektronisches Bremsmodul, das in Abhängigkeit eines Bremssignals einen Betriebsbremsdruck ausgibt, sein. Bevorzugt kann das Bremssystem auch mehrere Betriebsbremskreise aufweisen, wobei das Bremsmodul auch Betriebsbremsdrücke für verschiedene Bremskreise bereitstellen kann. Beispielsweise kann ein Vorderachsbremskreis zum Bremsen von Rädern einer Vorderachse eines Fahrzeugs von dem Bremsmodul mit einem Vorderachsbetriebsbremsdruck angesteuert werden, während das Bremsmodul ferner einen Hinterachsbetriebsbremsdruck für einen Hinterachsbremskreis zum Bremsen von Rädern einer Hinterachse des Fahrzeugs bereitstellt.

In einem dritten Aspekt der vorliegenden Erfindung wird die eingangs genannte Aufgabe gelöst durch ein Verfahren zum Steuern einer Parkbremsfunktion eines Fahrzeugs, insbesondere Nutzfahrzeugs, nach Anspruch 15.

Vorzugsweise weist das Verfahren ferner auf: Verbinden der Vorsteuereinheit mit einer Entlüftung, wenn der zurückgeführte ausgesteuerte Druck einen ersten Schwellwert unterschreitet.

In einem vierten Aspekt löst die Erfindung die eingangs genannte Aufgabe durch ein Fahrzeug, insbesondere Nutzfahrzeug, nach Anspruch 16.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen wer den können, ohne von der allgemeinen Idee der Erfindung , welche durch die nachfolgenden Ansprüche definiert wird, abzuweichen. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet. Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Figur 1: ein erstes Ausführungsbeispiel einer elektropneumatischen Ventilanordnung;
- Figur 2: ein zweites Ausführungsbeispiel einer elektropneumatischen Ventilanordnung;
- Figur 3: ein drittes Ausführungsbeispiel einer elektropneumatischen Ventilanordnung;
- Figur 4: ein viertes Ausführungsbeispiel einer elektropneumatischen Ventilanordnung;
- Figur 5: ein fünftes Ausführungsbeispiel einer elektropneumatischen Ventilanordnung, das nicht unter den Schutzumfang des vorliegenden Anspruchs 1 fällt;
- Figur 6: ein sechstes Ausführungsbeispiel einer elektropneumatischenVentilanordnung, das nicht unter den Schutzumfang des vorliegenden Anspruchs 1 fällt; und in
- Figur 7: ein Nutzfahrzeug.

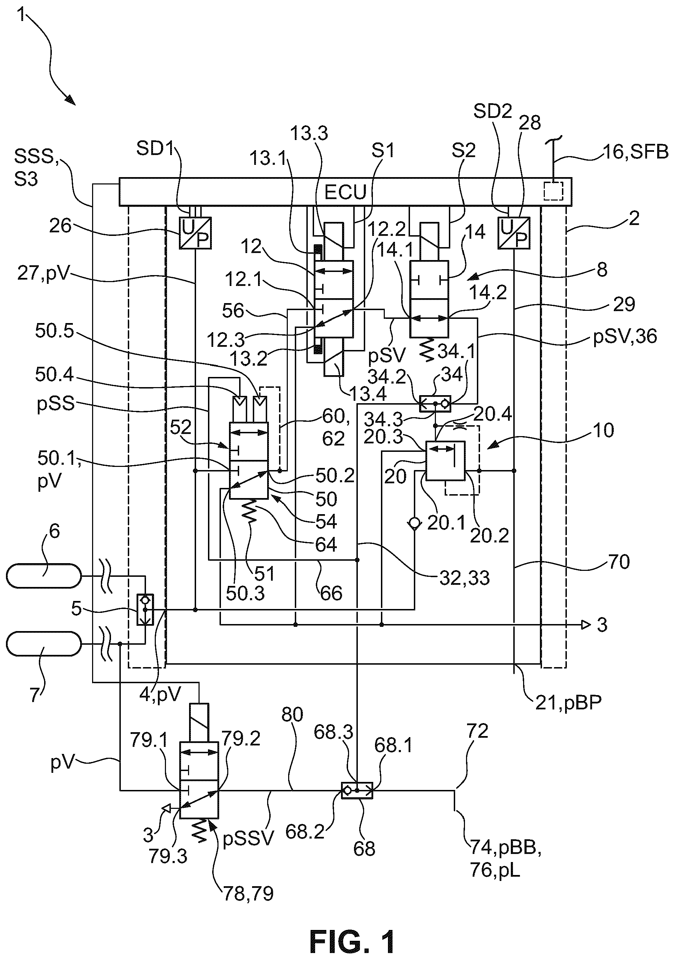

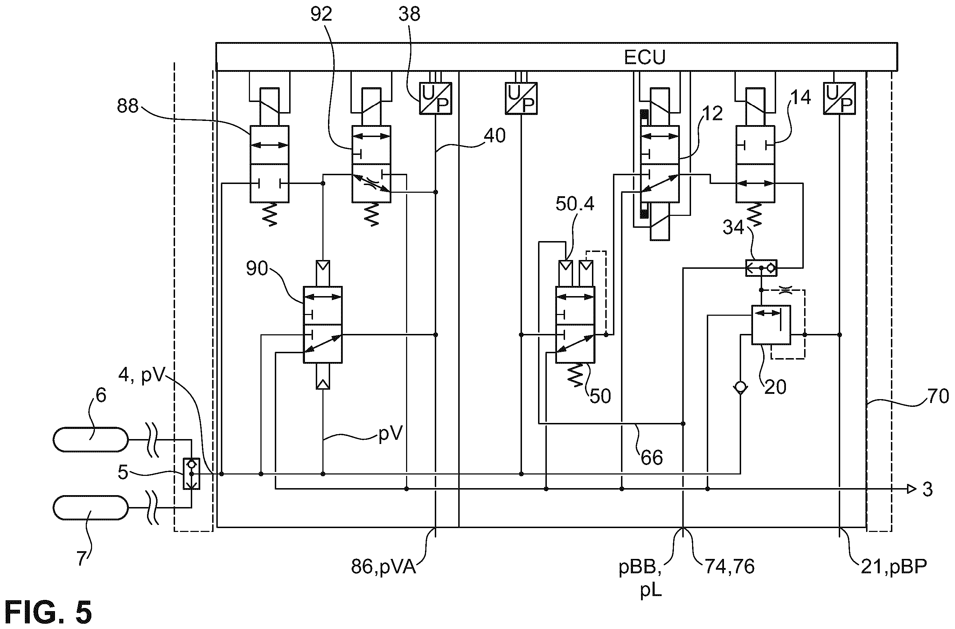

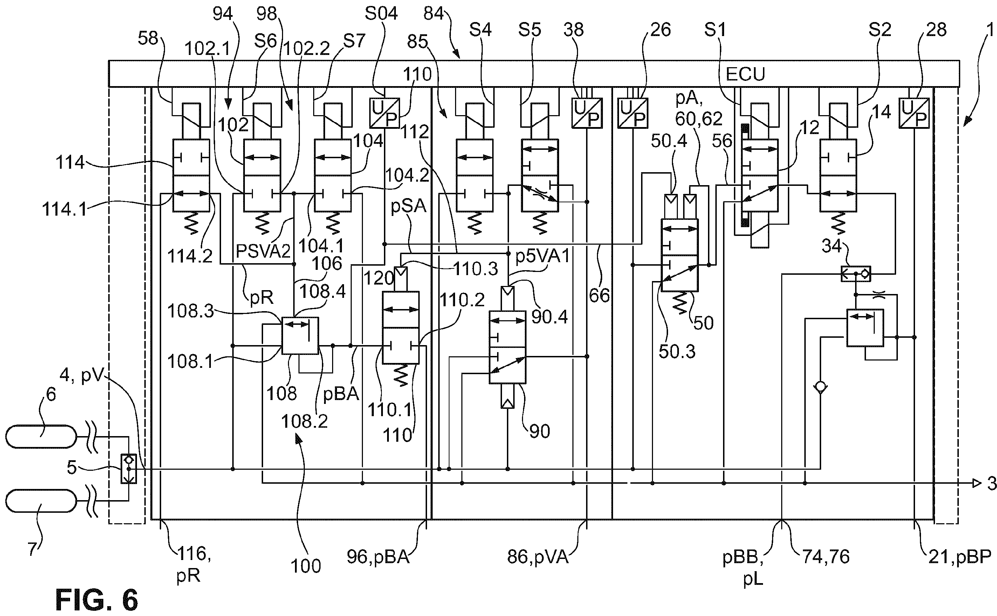

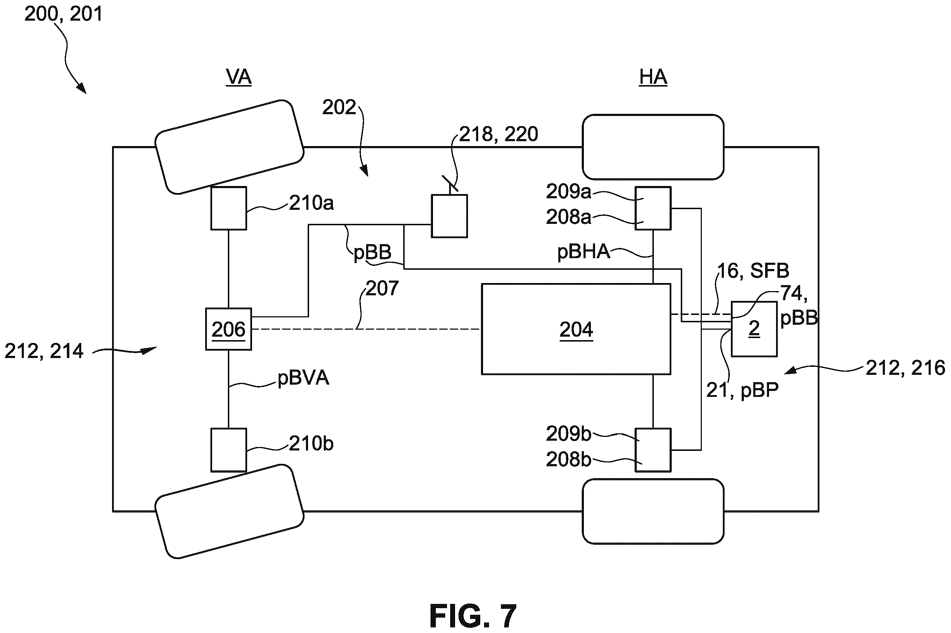

Eine elektropneumatische Ventilanordnung 1 ist in den in den Fig. 1 bis 6 gezeigten Ausführungsbeispielen wobei die Ausführungsbeispiele gemäß den Figuren 5 und 6 nicht unter den Schutzumfang des Anspruchs 1 fallen, jedoch für das Verständnis der Erfindung nützliche Ausführungsformen darstellen, als Feststellbremsmodul 2 ausgebildet, wobei dies nicht zwingend erforderlich ist, und die elektropneumatische Ventilanordnung 1 vielmehr auch mit anderen Einheiten integriert sein kann und/oder die einzelnen im Nachfolgenden beschriebenen Ventile können auch separat und/oder verteilt in einem Bremssystem 202 (vgl. Fig. 7) angeordnet sein.

Das Feststellbremsmodul 2 weist einen Vorratsanschluss 4 auf, an den über ein Vorratswechselventil 5 ein erster Druckluftvorrat 6 und ein zweiter Druckluftvorrat 7 angeschlossen sind (Fig. 7), die jeweils einen Vorratsdruck pV bereitstellen, sodass an dem Vorratsanschluss 4 der Vorratsdruck pV anliegt. Es ist nicht zwingend erforderlich, dass an den Vorratsanschluss 4 zwei Druckluftvorräte 6, 7 angeschlossen sind, vielmehr kann es auch ausreichen, wenn dort nur ein Druckluftvorrat angeschlossen ist oder der Vorratsanschluss 4 über ein weiteres Modul versorgt wird.

Die elektropneumatische Ventilanordnung 1 weist eine Vorsteuereinheit 8, die hier eine bistabile Vorsteuereinheit 8 ist, sowie eine Hauptventileinheit 10 auf. Die bistabile Vorsteuereinheit 8 umfasst ein elektromagnetisches Magnetventil 12. Das Magnetventil 12 hat einen ersten Magnetventilanschluss 12.1, einen zweiten Magnetventilanschluss 12.3 und einen dritten Magnetventilanschluss 12.3. Der erste Magnetventilanschluss 12.1 ist mit einem Sicherheitsventil 50 verbunden, das eine Versorgungsstellung 52 und eine in Figur 1 gezeigte Entlüftungsstellung 54 aufweist. In dem gezeigten Ausführungsbeispiel ist das Sicherheitsventil 50 mittels einer Spannfeder 51 in die Entlüftungsstellung 54 vorgespannt. Es kann aber auch vorgesehen sein, dass das Sicherheitsventil 50 rein pneumatisch betätigbar ist. Beispielsweise und bevorzugt könnte das Sicherheitsventil 50 auch mittels eines doppeltwirkenden pneumatischen Kolbens zwischen der Entlüftungsstellung 54 und der Versorgungsstellung 52 schaltbar ausgestaltet sein. Das Sicherheitsventil 50 weist einen ersten Sicherheitsventilanschluss 50.1, einen zweiten Sicherheitsventilanschluss 50.2 und einen dritten Sicherheitsventilanschluss 50.3 auf. Der erste Sicherheitsventilanschluss 50.1 ist mit dem Vorratsanschluss 4 verbunden und empfängt Vorratsdruck pV. In der Versorgungsstellung 52 sind der erste Sicherheitsventilanschluss 50.1 und der zweite Sicherheitsventilanschluss 50.2 fluidleitend verbunden, sodass der Vorratsdruck pV durch das Sicherheitsventil 50 durchgesteuert und über eine Versorgungsleitung 56, die den zweiten Sicherheitsventilanschluss 50.2 mit dem ersten Magnetventilanschluss 21.1 verbindet, am Magnetventil 12 bereitgestellt wird. In der Entlüftungsstellung 54 ist der zweite Sicherheitsventilanschluss 50.2 und aufgrund der unmittelbaren Verbindung auch der erste Magnetventilanschluss 12.1 mit dem dritten Sicherheitsventilanschluss 50.3 verbunden. Der dritte Sicherheitsventilanschluss 50.3 ist mit einer Entlüftung 3 verbunden, sodass das erste Magnetventilanschluss 12.1 über das Sicherheitsventil 50 entlüftet wird, wenn das Sicherheitsventil 50 in der Entlüftungsstellung 54 ist. Das Schalten des Sicherheitsventils 50 zwischen der Versorgungsstellung 52 und der Entlüftungsstellung 54 wird an späterer Stelle weiter erläutert.

Der zweite Magnetventilanschluss 12.2 ist mit der Hauptventileinheit 10 verbunden, in dem in den Fig. 1 bis 5 gezeigten Ausführungsbeispielen mittelbar über ein Halteventil 14. Der dritte Magnetventilanschluss 12.3 ist mit der Entlüftung 3 verbunden. Das Magnetventil 12 hat eine erste, in Fig. 1 nicht gezeigte Schaltstellung, in der der erste Magnetventilanschluss 12.1 mit dem zweiten Magnetventilanschluss 12.2 verbunden ist. In der in Fig. 1 gezeigten zweiten Schaltstellung ist der dritte Magnetventilanschluss 12.3 mit dem zweiten Magnetventilanschluss 12.2 verbunden. Insofern kann die erste Schaltstellung auch als Belüftungsstellung und die zweite Schaltstellung als Entlüftungsstellung bezeichnet werden. In der Belüftungsstellung wird über das Magnetventil 12 ein Vorsteuerdruck pSV ausgesteuert. Das Magnetventil 12 wird in Abhängigkeit von einem Feststellbremssignal SFB geschaltet, welches von dem Feststellbremsmodul 2 beispielsweise über einen Fahrzeug-BUS 16 empfangen wird oder auch unmittelbar an dem Magnetventil 12 bereitgestellt werden kann.

Das Magnetventil 12 weist einen ersten Permanentmagneten 13.1 und einen zweiten Permanentmagneten 13.2 auf. Darüber hinaus weist das Magnetventil 12 in der gezeigten Ausführungsform auch eine erste Spule 13.3 und eine zweite Spule 13.4 auf. In Abhängigkeit des Feststellbremssignals SFB wird entweder die erste Spule 13.3 oder die zweite Spule 13.4 bestromt. Wird die erste Spule 13.3 bestromt, wird in grundsätzlich bekannter Weise ein Anker des Magnetventils 12 angezogen und so das Magnetventil 12 in die Belüftungsstellung geschaltet. Der Anker wird dann von dem ersten Permanentmagneten 13.1 in der Belüftungsstellung gehalten, die demnach eine magnetische Raststellung ist. Der erste Permanentmagnet 13.1 und die erste Spule 13.3 sind der Belüftungsstellung zugeordnet. Wird hingegen die zweite Spule 13.4 bestromt, wird der Anker in die entgegengesetzte Raststellung gezogen und das Magnetventil 12 in die Entlüftungsstellung geschaltet. In dieser Raststellung wird der Anker durch den zweiten Permanentmagneten 13.2 gehalten. Es könnte grundsätzlich aber auch nur eine Spule 13.3, 13.4 vorgesehen sein, die dann zum Schalten des Magnetventils 12 in die Belüftungsstellung und Entlüftungsstellung umzupolen ist. Auch ist es denkbar, dass nur ein Permanentmagnet 13.1, 13.2 vorgesehen ist, der dann vorzugsweise an dem Anker des Magnetventils 12 angeordnet ist.

In den gezeigten Ausführungsbeispielen ist das Feststellbremsmodul 2 mit einer eigenen elektronischen Steuereinheit ECU ausgestattet, auch wenn dies nicht zwingend ist, und empfängt das Feststellbremssignal SFB und steuert dann in der Folge wenigstens ein erstes Schaltsignal S1 an dem Magnetventil 12 aus, um dieses zwischen der ersten und der zweiten Schaltstellung selektiv zu schalten. Für den Fall, dass das Feststellbremsmodul 2 über keine eigene elektronische Steuereinheit ECU verfügt, kann das erste Schaltsignal S1 auch von einer externen Steuereinheit direkt bereitgestellt werden. Das Magnetventil 12 lässt sich durch einen Impuls jeweils in die erste oder zweite Schaltstellung schalten.

Der von dem Magnetventil 12 ausgesteuerte Vorsteuerdruck pSV wird über das Halteventil 14 an der Hauptventileinheit 10 bereitgestellt. Die Hauptventileinheit 10 umfasst ein Relaisventil 20, welches einen Relaisventil-Vorratsanschluss 20.1, einen Relaisventil-Arbeitsanschluss 20.2, einen Relaisventil-Entlüftungsanschluss 20.3 und einen Relaisventil-Steueranschluss 20.4 aufweist. Der Relaisventil-Vorratsanschluss 20.1 ist mit dem Vorratsanschluss 4 verbunden und empfängt Vorratsdruck pV. Der Relaisventil-Arbeitsanschluss 20.2 ist mit einem Federspeicheranschluss 21 des Feststellbremsmoduls 2 verbunden, an welchem die Hauptventileinheit 10 einen Parkbremsdruck pBP aussteuert. Der Relaisventil-Entlüftungsanschluss 20.3 ist mit der Entlüftung 3 verbunden und der Relaisventil-Steueranschluss 20.4 ist mit der Vorsteuereinheit 8 verbunden und empfängt den Vorsteuerdruck pSV. An den Federspeicheranschluss 21 können einer oder mehrere Federspeicherbremszylinder 208a, 208b (vgl. Fig. 7) angeschlossen werden, die belüftet lösen und entlüftet mittels einer Federkraft zuspannen.

Zum Lösen der Federspeicherbremszylinder 208a, 208b muss also der Federspeicheranschluss 21 belüftet werden, sodass der Parkbremsdruck pBP ausgesteuert wird. Zu diesem Zweck wird das Magnetventil 12 von der in Fig. 1 gezeigten Entlüftungsstellung in die in Fig. 1 nicht gezeigte Belüftungsstellung verbracht, sodass der Vorsteuerdruck pSV ausgesteuert wird. Das Halteventil 14 ist in der offenen Schaltposition. Das Halteventil 14 weist einen ersten Halteventilanschluss 14.1 und einen zweiten Halteventilanschluss 14.2 auf, wobei der erste Halteventilanschluss 14.1 mit dem Magnetventil 12 verbunden ist, genauer gesagt mit dem zweiten Magnetventilanschluss 12.2, und den Vorsteuerdruck pSV empfängt. Der zweite Halteventilanschluss 14.2 ist mit der Hauptventileinheit 10, genauer gesagt mit dem Relaisventil-Steueranschluss 20.4 verbunden. Das Halteventil 14 ist elektromagnetisch und monostabil ausgebildet und kann von der stabilen ersten in Fig. 1 gezeigten Schaltstellung, die eine Öffnungsstellung ist, in eine zweite geschlossene, nicht stabile Schaltstellung durch Bereitstellen eines zweiten Schaltsignals S2 gebracht werden, indem ein Elektromagnet in dem Halteventil 14 bestromt wird. Wird also zunächst das Magnetventil 12 so geschaltet, dass der Vorsteuerdruck pSV ausgesteuert wird und das Halteventil 14 offen ist, wird der Vorsteuerdruck pSV weitergeleitet und an dem Relaisventil-Steueranschluss 20.4 ausgesteuert, welches dann in Folge diesen Druck volumenverstärkt und den Parkbremsdruck pBP an dem Federspeicheranschluss 21 aussteuert. Nun kann das Halteventil 14 in die geschlossene zweite Schaltstellung verbracht werden, sodass der Vorsteuerdruck pSV zwischen dem zweiten Halteventilanschluss 14.2 und dem Relaisventil-Steueranschluss 20.4 eingesperrt ist. Das Magnetventil 12 kann nun wieder in die erste in Fig. 1 gezeigte Entlüftungsstellung gebracht werden. Die Federspeicherbremszylinder 208a, 208b bleiben dennoch weiterhin belüftet und damit gelöst. Auch wenn hier nur eine Variante mit Vorsteuereinheit 8 und Hauptventileinheit 10 beschrieben ist, soll verstanden werden, dass die Hauptventileinheit 10 nicht zwingend erforderlich ist und der Vorsteuerdruck pSV ebenso direkt als Parkbremsdruck pBP ausgesteuert werden könnte. In diesem Fall wäre der zweite Halteventilanschluss 14.2 mit dem Federspeicheranschluss 21 verbunden ohne Zwischenschaltung der Hauptventileinheit 10.

Das bistabile Magnetventil 12 stellt sicher, dass das Feststellbremsmodul 2 auch beim Ausfall einer Stromversorgung in der zum Zeitpunkt des Ausfalls vorliegenden Schaltstellung verbleibt. Das Halteventil 14 ist monostabil und schaltet dann, wenn der Elektromagnet nicht bestromt wird, automatisch in die in Fig. 1 gezeigte offene Stellung. Das Magnetventil 12 wird hingegen durch den ersten Permanentmagneten 13.1 in der Belüftungsstellung oder durch den zweiten Permanentmagneten 13.2 in der Entlüftungsstellung gehalten.

Durch das Sicherheitsventil 50 wird ein weiterer Regelmechanismus der elektropneumatischen Ventileinheit 1 ermöglicht. Wie eingangs erläutert, wird das Magnetventil 12 der Vorsteuereinheit 8 nur dann mit Vorratsdruck pV versorgt, wenn das Sicherheitsventil 50 in der Versorgungsstellung 52 ist. In der Folge kann auch nur dann, wenn das Sicherheitsventil 50 in der Versorgungsstellung 52 ist, der Vorsteuerdruck pSV von der Vorsteuereinheit 8 an dem Relaisventil-Steueranschluss 20.4 bereitgestellt werden. Dahingegen wird die Vorsteuereinheit 8 und zumindest auch eine erste Steuerleitung 58, die die Vorsteuereinheit 8 mit der Hauptventileinheit 10 verbindet, zwangsweise und unabhängig von der Schaltstellung des Magnetventils 12 entlüftet, wenn das Sicherheitsventil 50 in der Entlüftungsstellung 54 ist.

Das Sicherheitsventil 50 weist einen Sicherheitsventilsteueranschluss 50.4 und einen Sicherheitsventilhalteanschluss 50.5 auf. Der Sicherheitsventilhalteanschluss 50.5 ist dazu vorgesehen, das Sicherheitsventil 50 in der in Fig. 1 nicht gezeigten Versorgungsstellung 52 zu halten. Der Sicherheitsventilhalteanschluss 50.5 ist über eine Rückführleitung 60 mit der Versorgungsleitung 56 verbunden. Die Rückführleitung 60 bildet einen Sicherheitsventilhaltekreis 62, der einen vom Sicherheitsventil 50 am zweiten Sicherheitsventilanschluss 50.2 ausgesteuerter Druck pA zum Sicherheitsventil 50 bzw. dem Sicherheitsventilhalteanschluss 50.5 zurückführt. Im regulären Betrieb entspricht der ausgesteuerte Druck pA dem Vorratsdruck pV. Der Sicherheitsventilhalteanschluss 50.5 ist so angeordnet, dass der ausgesteuerte Druck pA so auf das Sicherheitsventil 50 wirkt, dass dieses in die erste in Fig. 1 nicht gezeigte Schaltstellung, also die Versorgungsstellung 52, belastet wird.

Das Sicherheitsventil 50 hat eine Vorzugsstellung, und zwar ist das Sicherheitsventil 50 in die in Fig. 1 gezeigte Entlüftungsstellung 54 vorgespannt. Zu diesem Zweck ist eine Feder 64 vorgesehen, die das Sicherheitsventil 50 in die in Fig. 1 gezeigte Entlüftungsstellung 54 vorspannt. Der am Sicherheitsventilhalteanschluss 50.5 anliegende ausgesteuerte Druck pA wirkt dieser Feder 64 entgegen. Wenn das Sicherheitsventil 50 in der Versorgungsstellung 52 ist, wird das Sicherheitsventil 50 durch den am Sicherheitsventilhalteanschluss 50.5 bereitgestellten ausgesteuerten Druck pA in dieser Versorgungsstellung 52 gehalten, solange der ausgesteuerte Druck pA einen ersten Schwellwert übersteigt. Sinkt allerdings der ausgesteuerte Druck pA unter den ersten Schwellwert, der etwa in einem Bereich von 150 kPa bis 350 kPa liegen kann, ist die Kraftwirkung durch den ausgesteuerten Druck pA geringer als die Federkraft der Feder 64, sodass das Sicherheitsventil 50 in die in Fig. 1 gezeigte Entlüftungsstellung 54 zurückfällt.

In der Entlüftungsstellung 54 wird kein Vorratsdruck pV an der Vorsteuereinheit 8 bereitgestellt und in der Folge steuert die Vorsteuereinheit 8 auch keinen Vorsteuerdruck pSV aus. Sofern nicht ein anderer Druck am Relaisventil-Steueranschluss 20.4 bereitgestellt wird, entlüftet das Relaisventil 20 den Federspeicheranschluss 21 und daran angeschlossene Feststellbremsen spannen zu.

Das Schalten des Sicherheitsventils 50 von der Versorgungsstellung 52 in die Entlüftungsstellung 54 erfolgt automatisch, wenn der ausgesteuerte Druck pA (in diesem Ausführungsbeispiel der Vorratsdruck pV) den ersten Schwellwert erreicht oder unterschreitet, sodass die Sicherheitsfunktion erreicht wird. Kommt es in einem Fehlerfall des Nutzfahrzeugs 200 dazu, dass der Vorratsdruck pV absinkt, weil sowohl der erste als auch der zweite Druckluftvorrat 6, 7 entleert werden, ein Leck haben oder aktiv durch den Fahrer heruntergepumpt werden, sinkt auch der ausgesteuerte Druck pA ab, wenn das Sicherheitsventil 50 in der in Fig. 1 nicht gezeigten Versorgungsstellung 52 ist. Ab einem gewissen Punkt, nämlich vorzugsweise bei Unterschreiten des ersten Schwellwerts, verbringt die Feder 18 das Sicherheitsventil 50 in die in Fig. 1 gezeigte Entlüftungsstellung 54, sodass infolgedessen der Relaisventil-Steueranschluss 20.4 entlüftet wird und kein Parkbremsdruck pBP mehr ausgesteuert wird. Die Federspeicherbremszylinder 208a, 208b werden vollständig entlüftet. Die Federspeicherbremszylinder 208a, 208b spannen zu und bremsen das Nutzfahrzeug 200 auch dann, wenn an der Hinterachse angeordnete Betriebsbremszylinder 209a, 209b und über an der Vorderachse angeordnete Betriebsbremszylinder 210a, 210b aufgrund des abgesunkenen Vorratsdrucks pV keine oder nur eine eingeschränkte Bremsung des Fahrzeugs 200 gewährleisten können.

In der Entlüftungsstellung 54 entspricht der ausgesteuerte Druck pA einem Druckniveau der Umwelt und das Sicherheitsventil 50 verbleibt unabhängig vom am ersten Sicherheitsventilanschluss 50.1 bereitgestellten Druck in der Entlüftungsstellung 54. Die Feststellbremse bleibt auch dann (sofern nicht ein anderer Druck am Relaisventil-Steueranschluss 20.4 bereitgestellt wird) eingelegt, wenn der Versorgungsdruck pV nach einem vorhergehenden Absinken unter den ersten Schwellwert anschließend den ersten Schwellwert wieder übersteigt. Sollte in der Entlüftungsstellung 54 des Sicherheitsventils 50 nun der erste und/oder zweite Druckluftvorrat 6, 7 wieder aufgefüllt werden, beispielsweise, weil das Nutzfahrzeug 200 wieder Energie hat oder die ersten und zweiten Druckluftvorräte 6, 7 durch einen Servicetechniker aufgefüllt werden, ist das Sicherheitsventil 50 dennoch in der in Fig. 1 gezeigten Entlüftungsstellung 54 und der Federspeicheranschluss 21 wird nicht automatisch und ungewollt belüftet.

Zum Schalten des Sicherheitsventils 50 aus der Entlüftungsstellung 54 in die Versorgungsstellung 52 ist der Sicherheitsventilsteueranschluss 50.4 vorgesehen, an dem ein Sicherheitssteuerdruck pSS bereitgestellt werden kann. Vorzugsweise schaltet das Sicherheitsventil 50 dann in die Versorgungsstellung 52, wenn der Sicherheitssteuerdruck pSS einen zweiten Schwellwert, der vorzugsweise im Bereich von 150 kPa bis 400 kPa liegt, übersteigt. Zum Bereitstellen des Sicherheitssteuerdrucks pSS ist der Sicherheitsventilsteueranschluss 50.4 mit einer ersten Sicherheitssteuerleitung 66 verbunden.

Im ersten Ausführungsbeispiel gemäß Fig. 1 ist der Sicherheitssteuerdruck pSS auf zwei Arten bereitstellbar. Hierfür ist die Sicherheitssteuerleitung 66 mit einem dritten Sicherheitswechselventilanschluss 68.3 eines Sicherheitswechselventils 68 verbunden, das ferner einen ersten Sicherheitswechselventilanschluss 68.1, einen zweiten Sicherheitswechselventilanschluss 68.2 aufweist. Am ersten Sicherheitswechselventilanschluss 68.1 und am zweiten Sicherheitswechselventilanschluss 68.2 können Drücke bereitgestellt werden und das Sicherheitswechselventil 68 steuert den höheren dieser Drücke am dritten Sicherheitswechselventilanschluss 68.3 aus. In dieser Variante ist das Sicherheitswechselventil 68 ein externes Ventil, das außerhalb eines Gehäuses 70 der elektropneumatischen Ventilanordnung 1 angeordnet ist.

Der erste Sicherheitswechselventilanschluss 68.1 ist über eine zweite Sicherheitssteuerleitung 72 mit einem Betriebsbremsanschluss 74 verbunden, an dem ein Betriebsbremsdruck pBB bereitgestellt werden kann. Der Sicherheitsventilsteueranschluss 50.4 ist über die erste Sicherheitssteuerleitung 66, das Sicherheitswechselventil 68 und die zweite Sicherheitssteuerleitung 72 mittelbar mit dem Betriebsbremsanschluss 74 verbunden, sodass der Betriebsbremsdruck pBB als Sicherheitssteuerdruck pSS an dem Sicherheitsventilsteueranschluss 50.4 bereitstellbar ist. Sobald nach einem behobenen Fehler ein Betriebsbremsdruck pBB bereitgestellt werden kann, es also wieder möglich ist mittels der Betriebsbremszylinder 210a, 210b der Vorderachse und/oder der Betriebsbremszylinder 209a, 209b der Hinterachse eine Betriebsbremsung durchzuführen, ist es auch möglich, die Feststellbremse durch Belüften des Federspeicheranschlusses 21 wieder zu lösen. Dafür wird, beispielsweise durch Betätigen eines Bremspedals, der Betriebsbremsdruck pBB als Sicherheitssteuerdruck pSS an dem Sicherheitsventilsteueranschluss 50.4 bereitgestellt, woraufhin das Sicherheitsventil 50 in die Versorgungsstellung 52 schaltet. Die Vorsteuereinheit 8 wird daraufhin mit Vorratsdruck pV versorgt und stellt den Vorsteuerdruck pSV am Relaisventil 20 bereit, das wiederum den Parkbremsdruck pBP aussteuert und am Federspeicheranschluss 21 bereitstellt. Mit dem Federspeicheranschluss 21 verbundene Feststellbremsen werden gelöst und das Fahrzeug ist wieder fahrbereit.

Alternativ kann der Sicherheitssteuerdruck pSS in diesem Ausführungsbeispiel auch über eine Sicherheitsschalteinheit 78 bereitgestellt werden, die über eine dritte Sicherheitssteuerleitung 80 mit dem zweiten Sicherheitswechselventilanschluss 68.2 verbunden ist. Hier weist die Sicherheitsschalteinheit 78 ein elektrisch schaltbares Sicherheitsschaltventil 79 auf, das als 3/2-Wege-Ventil ausgebildet ist und einen ersten Sicherheitsschaltanschluss 79.1, einen zweiten Sicherheitsschaltanschluss 79.2 sowie einen dritten Sicherheitsschaltanschluss 79.3 hat. Der zweite Sicherheitsschaltanschluss 79.2 ist zum Bereitstellen eines Sicherheitsvorsteuerdrucks pSSV mit dem Sicherheitswechselventil 68 verbunden. Das Sicherheitsschaltventil 79 ist ein monostabiles Ventil und ist in die in Fig. 1 gezeigte Entlüftungsstellung vorgespannt, in der der zweite Sicherheitsschaltanschluss 79.2 und der dritte Sicherheitsschaltanschluss 79.3 verbunden sind, sodass die dritte Sicherheitssteuerleitung 80 über das Sicherheitsschaltventil 79 mit der Entlüftung 3, verbunden ist. Die Entlüftung 3 kann eine zweite Entlüftung sein oder mit derjenigen Entlüftung 3 verbunden sein, mit der beispielsweise auch der Relaisventil-Entlüftungsanschluss 20.3 verbunden ist.

In der in Fig. 1 gezeigten Schaltstellung des Sicherheitsschaltventils 79 steuert das Sicherheitswechselventil 68 den Betriebsbremsdruck pBB aus. Der erste Sicherheitsschaltanschluss 79.1 ist mit dem zweiten Druckluftvorrat 7 verbunden, sodass Vorratsdruck pV am ersten Sicherheitsschaltanschluss 79.1 anliegt. Wenn die ECU ein drittes Schaltsignal S3, das auch als Sicherheitsschaltsignal SSS bezeichnet wird, bereitstellt, schaltet das Sicherheitsschaltventil 79 von der in Fig. 1 gezeigten Entlüftungsstellung in eine Belüftungsstellung, in der der erste Sicherheitsschaltanschluss 79.1 fluidleitend mit dem zweiten Sicherheitsschaltanschluss 79.2 verbunden ist. Der am zweiten Sicherheitsschaltanschluss 79.2 ausgesteuerte Sicherheitsvorsteuerdruck pSSV ist dann der Vorratsdruck pV, der über die dritte Sicherheitssteuerleitung 80 auch am zweiten Sicherheitswechselventilanschluss 68.2 des Sicherheitswechselventils 68 anliegt. Wenn der Sicherheitsvorsteuerdruck pSSV höher ist als der gegebenenfalls am ersten Sicherheitswechselventilanschluss 68.1 bereitgestellte Betriebsbremsdruck pBB, dann steuert das Sicherheitswechselventil 68 am dritten Sicherheitswechselventilanschluss 68.3 den Sicherheitsvorsteuerdruck pSSV (hier den Vorratsdruck pV) aus. Dieser Sicherheitsvorsteuerdruck pSSV liegt dann über die erste Sicherheitssteuerleitung 66 als Sicherheitssteuerdruck pSS am Sicherheitsventilsteueranschluss 50.4 an. In dieser Variante ist der Sicherheitssteuerdruck pSS also auch in Abhängigkeit des von der ECU bereitgestellten Signals S3 aussteuerbar.

Das Feststellbremsmodul 2 weist in dem hier gezeigten Ausführungsbeispiel (Fig. 1) ferner einen ersten Drucksensor 26 sowie einen zweiten Drucksensor 28 auf. Der erste Drucksensor 26 ist über eine erste Druckmessleitung 27 mit dem Vorratsanschluss 4 verbunden und misst so den Vorratsdruck pV und stellt ein entsprechendes erstes Drucksignal SD1 an der elektronischen Steuereinheit ECU bereit. Der zweite Drucksensor 28 ist über eine zweite Druckmessleitung 29 mit dem Federspeicheranschluss 21 verbunden und ermittelt so den Parkbremsdruck pBP und stellt ein entsprechendes zweites Drucksignal SD2 an der elektronischen Steuereinheit ECU bereit. Über die ersten und zweiten Drucksignale SD1, SD2 kann die Aussteuerung der Drücke sowie die Schaltstellung der einzelnen Ventile verifiziert und plausibilisiert werden.

In dem in Fig. 1 dargestellten ersten Ausführungsbeispiel ist der Betriebsbremsanschluss 74 ein Lösesteueranschluss 76, sodass der Betriebsbremsdruck pBB ein Lösesteuerdruck pL ist. Ein solcher Lösesteueranschluss 30 wird auch als Anti-Compound-Anschluss bezeichnet, über den der Lösesteuerdruck pL eingesteuert werden kann. Der Lösesteueranschluss 76 ist mit einem Lösesteuerpfad 32 verbunden. Der über den Lösesteueranschluss 76 eingesteuerte Lösesteuerdruck pL bewirkt die Aussteuerung des Parkbremsdrucks pBP am wenigstens einen Federspeicheranschluss 21. Der Lösesteuerpfad 32 umfasst eine Löseleitung 33, die sich von dem Lösesteueranschluss 76 erstreckt. Als Lösesteuerdruck pL wird der Betriebsbremsdruck pBB einer weiteren Achse, beispielsweise der Vorder- und/oder Hinterachse, verwendet. Für den Fall, dass die an dem Federspeicheranschluss 21 angeschlossenen Federspeicherbremszylinder 208a, 208b auch zum Zusatzbremsen oder Notbremsen verwendet werden, soll hierdurch eine zu starke Betätigung der Federspeicherbremszylinder 208a, 208b verhindert werden, die zum Blockieren des Fahrzeugs 200 führen könnte. Werden also Betriebsbremsen an der Hinterachse aktiviert, sollen möglichst nicht gleichzeitig auch die Federspeicherbremszylinder 208a, 208b eingelegt werden, sodass es sich anbietet, den Betriebsbremsdruck der Hinterachse als Lösesteuerdruck pL dem Lösesteueranschluss 76 bereitzustellen, um die Federspeicherbremszylinder 208a, 208b reziprok zu Einlegen der Betriebsbremsen zu lösen.

Die Lösesteuerleitung 33 ist mit einem Hauptsteuerwechselventil 34 verbunden. Der Lösesteuerdruck pL kann über den Lösesteuerpfad 32 dem Relaisventil-Steueranschluss 20.4 zugeführt werden. Das Hauptsteuerwechselventil 34 hat einen ersten Hauptsteuerwechselventilanschluss 34.1, einen zweiten Hauptsteuerwechselventilanschluss 34.2 und einen dritten Hauptsteuerwechselventilanschluss 34.3. Das Hauptsteuerwechselventil 34 ist so ausgebildet, dass es jeweils den höheren des am ersten und zweiten Hauptsteuerwechselventilanschluss 34.1, 34.2 anliegenden Druck an den dritten Hauptsteuerwechselventilanschluss 34.3 weiterleitet. Der erste Hauptsteuerwechselventilanschluss 34.1 ist hier über eine zweite Steuerleitung 36 mit dem zweiten Hauptsteuerwechselventilanschluss 14.2 verbunden, kann aber auch unmittelbar mit dem zweiten Halteventilanschluss 14.2 oder auch mit dem Magnetventil 12 verbunden sein. Jedenfalls ist der erste Hauptsteuerwechselventilanschluss 34.1 mit der Vorsteuereinheit 8 verbunden und empfängt den Vorsteuerdruck pSV. Der zweite Hauptsteuerwechselventilanschluss 34.2 ist mit dem Lösesteueranschluss 76 verbunden und empfängt den Lösesteuerdruck pL. Der dritte Hauptsteuerwechselventilanschluss 34.3 ist mit dem Relaisventil-Steueranschluss 20.4 verbunden, sodass jeweils der höhere des Vorsteuerdrucks pSV oder des Lösesteuerdrucks pL an den Relaisventil-Steueranschluss 20.4 ausgesteuert wird, um so die Aussteuerung des Parkbremsdrucks pBP zu bewirken.

Der Lösesteueranschluss 76 erfüllt in diesem Ausführungsbeispiel (Fig. 1) eine besonders vorteilhafte Doppelfunktion. Zum einen wird die Anti-Compound-Funktion, also das Verhindern einer zu starken Betätigung der Bremsen, erfüllt und zum anderen kann der Lösesteuerdruck pL als Sicherheitssteuerdruck pSS zum Schalten des Sicherheitsventils 50 in die Versorgungsstellung 52 genutzt werden. Hierdurch kann der erforderliche Aufwand für eine fluidleitende Verbindung der Komponenten reduziert und ein zusätzlicher Anschluss eingespart werden.

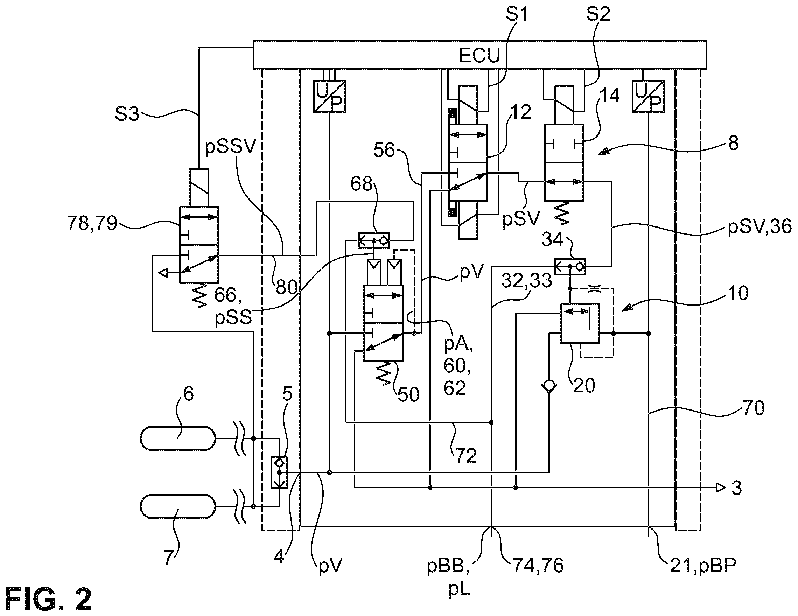

Die in den Fig. 2 bis Fig. 6 gezeigten weiteren Ausführungsbeispiele basieren grundsätzlich auf dem ersten Ausführungsbeispiel (Fig. 1), sodass gleiche und ähnliche Elemente mit gleichen Bezugszeichen versehen sind, wobei die Ausführungsbeispiele gemäß den Figuren 5 und 6 nicht unter den Schutzumfang des Anspruchs 1 fallen. Insofern wird vollumfänglich auf die obige Beschreibung zum ersten Ausführungsbeispiel (Fig. 1) verwiesen. Im Folgenden werden insbesondere die Unterschiede zum ersten Ausführungsbeispiel hervorgehoben.

Der wesentliche Unterschied im zweiten Ausführungsbeispiel (Fig. 2) ist der, dass das Sicherheitswechselventil 68 nicht als externes Ventil ausgebildet ist, sondern innerhalb des Gehäuses 70 angeordnet ist. Der Betriebsbremsanschluss 74, der auch hier den Lösesteueranschluss 76 bildet, ist unmittelbar am Gehäuse 70 angeordnet. Ferner ist die Sicherheitsschalteinheit im zweiten Ausführungsbeispiel neben dem zweiten Druckluftvorrat 7 auch mit dem ersten Druckluftvorrat 6 verbunden.

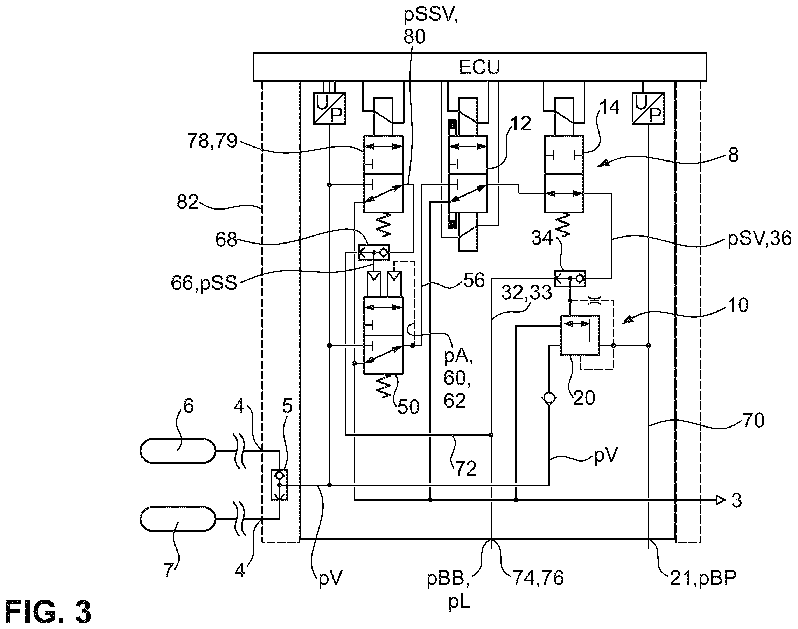

Im dritten Ausführungsbeispiel (Fig. 3) ist die elektropneumatische Ventilanordnung 1 als hochintegrierte Ventilanordnung ausgebildet. Sowohl das Sicherheitswechselventil 68 als auch die Sicherheitsschalteinheit 78 sind in das Gehäuse 70 integriert. Die Funktionalität ist zu den ersten beiden Ausführungsbeispielen im Wesentlichen unverändert. Wie in Fig. 3 durch eine Strichlinie 82 angedeutet wird, kann das Vorrats-Wechselventil 5 sowohl innerhalb als auch außerhalb des Gehäuses 70 angeordnet sein. Für den Fall, dass das Vorrats-Wechselventil 5 innerhalb des Gehäuses (der Strichlinie 82) angeordnet ist, weist die elektropneumatische Ventilanordnung 1 zwei Vorratsanschlüsse 4 auf.

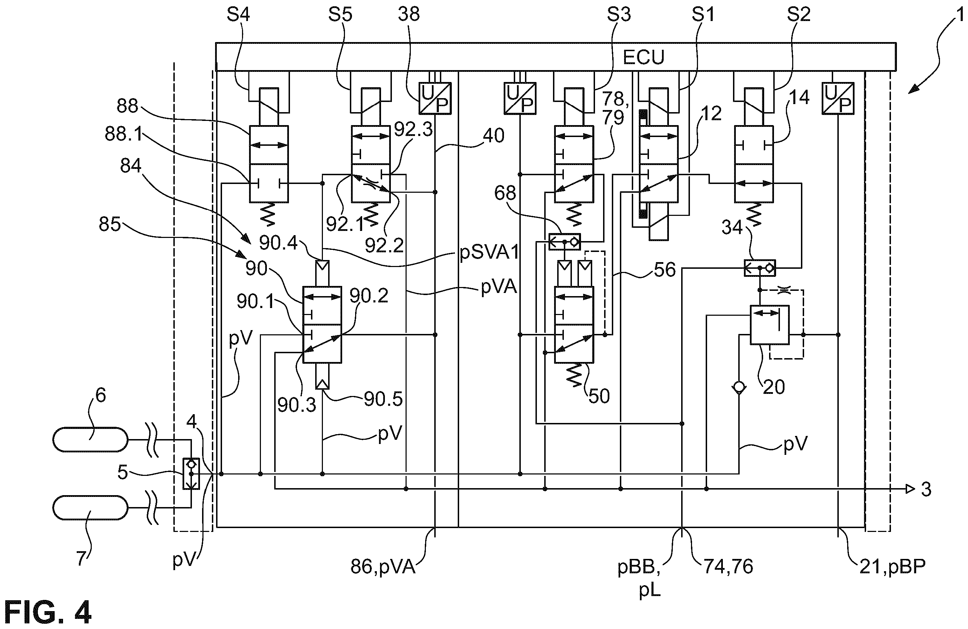

Im vierten Ausführungsbeispiel gemäß Fig. 4 ist die elektropneumatische Ventilanordnung 1 im Wesentlichen analog zum dritten Ausführungsbeispiel (Fig. 3) ausgebildet, weist aber zusätzlich eine Anhängereinheit 84 auf. Über eine Anhängerversorgungseinheit 85 der Anhängereinheit 84 kann an einem Anhängervorratsanschluss 86 Anhängervorratsdruck pVA bereitgestellt werden, um Betriebsbremszylinder eines mit dem Nutzfahrzeug 200 verbundenen Anhängers (nicht dargestellt) zu versorgen. Hierfür weist die Anhängerversorgungseinheit 85 in diesem Ausführungsbeispiel ein Anhängerversorgungsschaltventil 88, ein Anhängerversorgungsschutzventil 90 und eine Anhängerversorgungshalteventil 92 auf. Da Anhängerversorgungsschaltventil 88 hat einen ersten Anhängerschaltanschluss 88.1 und einen zweiten Anhängerschaltanschluss 88.2. Das Anhängerversorgungsschutzventil 90 weist einen ersten Anhängerschutzanschluss 90.1, zweiten Anhängerschutzanschluss 90.2 und einen dritten Anhängerschutzanschluss 90.3 auf. Das Anhängerversorgungshalteventil 92 hat einen ersten Anhängerhalteanschluss 92.1, einen zweiten Anhängerhalteanschluss 92.2 und einen dritten Anhängerhalteanschluss 92.3. Das Anhängerversorgungsschaltventil 88 als elektrisch schaltbares monostabiles 2/2-Wege-Ventil ausgebildet. Wenn die ECU ein viertes Schaltsignal S4 bereitstellt schaltet das Anhängerversorgungsschaltventil 88 von einer in Fig. 4 gezeigten Verschlussstellung, in der der erste Anhängerschaltanschluss 88.1 und der zweite Anhängerschaltanschluss 88.2 getrennt sind, in eine Belüftungsstellung, in der der erste Anhängerschaltanschluss 88.1 und der zweite Anhängerschaltanschluss 88.2 verbunden sind. Der erste Anhängerschaltanschluss 88.1 ist mit dem Vorratsanschluss 4 verbunden und empfängt Vorratsdruck pV. In der Belüftungsstellung leitet das Anhängerversorgungsschaltventil 88 den Vorratsdruck pV durch und stellt diesen an einem ersten Anhängerschutzventilsteueranschluss 90.4 bereit.

Das Anhängerversorgungsschutzventil 90 ist ein bistabiles 3/2-Wege-Ventil, das durch Bereitstellen des Vorratsdrucks pV am ersten Anhängerschutzventilsteueranschluss 90.4 von einer in Fig. 4 gezeigten Entlüftungsstellung in eine Belüftungsstellung schaltbar ist. In der Belüftungsstellung sind der erste Anhängerschutzanschluss 90.1 und der zweite Anhängerschutzanschluss 90.2 fluidleitend verbunden, sodass Vorratsdruck pV vom Vorratsanschluss 4 über den ersten Anhängerschutzanschluss 90.1 zum zweiten Anhängerschutzanschluss 90.2 und zum mit dem zweiten Anhängerschutzanschluss 90.2 verbundenen Anhängervorratsanschluss 86 geleitet wird. Der Anhängervorratsdruck pVA entspricht dann dem Vorratsdruck pV. In der Entlüftungsstellung verbindet das Anhängerversorgungsschutzventil 90 hingegen den Anhängervorratsanschluss 86 mit der Entlüftung 3.

Bei diesem initialen Schalten bildet der vom Anhängerversorgungsschaltventil 88 am ersten Anhängerschutzventilsteueranschluss 90.4 bereitgestellte Vorratsdruck pV einen ersten Anhängervorsteuerdruck pSVA1. Um diesen Vorratsdruck pV nicht dauerhaft bereitstellen zu müssen bzw. um eine dauerhaftes Bereitstellen des vierten Schaltsignals zu vermeiden, ist das Anhängerversorgungshalteventil 92 vorgesehen. Der zweite Anhängerhalteanschluss 92.2 ist unmittelbar mit dem Anhängervorratsanschluss 86 verbunden. Für den Fall, dass am zweiten Anhängerschutzanschluss 90.2 Vorratsdruck pV ausgesteuert wird, liegt dieser sowohl am Anhängervorratsanschluss 86 als auch am zweiten Anhängerhalteanschluss 92.2 an. Das Anhängerversorgungshalteventil 92 ist als monostabiles 3/2-Wege-Ventil ausgebildet, das eine in Fig. 4 gezeigte Haltestellung als Vorzugsstellung aufweist. In dieser Haltestellung ist der zweite Anhängerhalteanschluss 92.2 mit dem ersten Anhängerhalteanschluss 92.1 fluidleitend verbunden, sodass der Anhängervorratsdruck pVA als erster Anhängervorsteuerdruck pSVA1 am ersten Anhängerschutzventilsteueranschluss 90.4 bereitgestellt wird. Nach dem initialen Schalten des Anhängerversorgungsschutzventils 90 kann das Anhängerversorgungsschaltventil 88 in die in Fig. 4 gezeigte geschlossene Stellung zurückkehren und die Schaltstellung des Anhängerversorgungsschutzventils 90 wird durch das Zurückführen des Anhängervorratsdrucks pVA über das Anhängerversorgungshalteventil 92 gehalten. Vorzugsweise ist das Anhängerversorgungshalteventil 92, wie in Fig. 4 dargestellt, als Drosselventil ausgebildet, das kleine Druckschwankungen des Anhängervorratsdrucks pVA ausgleicht.

Wenn hingegen die ECU ein fünftes Schaltsignal S5 bereitstellt, schaltet das Anhängerversorgungshalteventil 92 in eine Entlüftungsstellung und verbindet den ersten Anhängerschutzventilsteueranschluss 90.4 über den ersten Anhängerhalteanschluss 92.1 und den dritten Anhängerhalteanschluss 92.3 mit der Entlüftung 3. Ein zweiter Anhängerschutzventilsteueranschluss 90.5 ist unmittelbar mit dem Vorratsanschluss 4 verbunden, sodass der Vorratsdruck pV dort anliegt. Wenn nun der erste Anhängerschutzventilsteueranschluss 90.4 entlüftet wird, ist der am zweiten Anhängerschutzventilsteueranschluss 90.5 anliegende Druck größer als der am ersten Anhängerschutzventilsteueranschluss 90.4 anliegende Druck und das Anhängerversorgungsschutzventil 90 schaltet in die in Fig. 4 gezeigte Entlüftungsstellung. In dieser Entlüftungsstellung ist der zweite Anhängerschutzanschluss 90.2 und damit auch der Anhängervorratsanschluss 86 mit der Entlüftung 3 verbunden.

Das Schalten des Anhängerversorgungsschutzventil 90 von der Belüftungsstellung in die in Fig. 4 gezeigte Entlüftungsstellung kann aber als Schutzfunktion auch dann erfolgen, wenn das Anhängerversorgungshalteventil 92 in der in Fig. 4 gezeigten Schaltstellung ist. Wenn beispielsweise eine Pneumatikverbindung zum Anhänger abreißt, wird der Anhängerschutzanschluss 90.2 schlagartig entlüftet. In der Folge wird auch der erster Anhängerschutzventilsteueranschluss 90.4 entlüftet, da dieser über den ersten Anhängerhalteanschluss 92.1 und den zweiten Anhängerhalteanschluss 92.2 fluidleitend mit dem Anhängervorratsanschluss 86 verbunden ist. Am zweiten Anhängerschutzventilsteueranschluss 90.5 liegt weiterhin der Vorratsdruck pV an, sodass das Anhängerversorgungsschutzventil automatisch in die in Fig. 4 gezeigte Entlüftungsstellung schaltet und so eine fluidleitende Verbindung der Druckluftvorräte 6, 7 mit dem Anhängervorratsanschluss unterbricht. Ein Leerlaufen der Druckluftvorräte 6, 7 im Falle eines unvorhergesehenen Entlüftens des Anhängervorratsanschlusses 86 wird verhindert.

Das Feststellbremsmodul 2 weist in dem hier gezeigten Ausführungsbeispiel (Fig. 4) ferner einen dritten Drucksensor 38 auf, der über eine dritte Druckmessleitung 40 mit dem Anhängervorratsanschluss 86 verbunden ist. Der dritte Drucksensor 38 misst den Anhängervorratsdruck pVA und stellt ein entsprechendes drittes Drucksignal SD3 an der elektronischen Steuereinheit ECU bereit. Über das dritte Drucksignale SD3 kann die Aussteuerung des Anhängervorratsdrucks pVA sowie die Schaltstellung der einzelnen Ventile der Anhängerversorgungseinheit 85 verifiziert und plausibilisiert werden.

Das in Fig. 5 gezeigte fünfte Ausführungsbeispiel , das nicht unter den Schutzumfang des Anspruchs 1 fällt, basiert grundsätzlich auf dem vierten Ausführungsbeispiel (Fig. 4). Der wesentliche Unterschied im fünften Ausführungsbeispiel besteht darin, dass keine Sicherheitsschalteinheit 78 vorgesehen ist. Der Sicherheitsventilsteueranschluss 50.4 bzw. die erste Sicherheitssteuerleitung 66 sind unmittelbar mit dem Betriebsbremsanschluss 74, der auch im fünften Ausführungsbeispiel der Lösesteueranschluss 76 ist, verbunden, um den Betriebsbremsdruck pBB bzw. den Lösesteuerdruck pL zu empfangen.

Das sechste Ausführungsbeispiel (Fig. 6) , das nicht unter den Schutzumfang des Anspruchs 1 fällt, basiert ebenfalls grundsätzlich auf dem vierten Ausführungsbeispiel (Fig. 4), unterscheidet sich davon aber durch eine zusätzliche Anhängersteuereinheit 94 der Anhängereinheit 84 und durch eine alternative Bereitstellung des Sicherheitssteuerdrucks pSS. Die Anhängersteuereinheit 94 ist dazu vorgesehen an einem Anhängersteueranschluss 96 einen Anhängerbremsdruck pBA auszusteuern, der zum Betätigen von Betriebsbremsen des Anhängers vorgesehen ist. Zu diesem Zweck weist die Anhängersteuereinheit 94 eine Anhängervorsteuereinheit 98 und eine Anhängerhauptventileinheit 100 auf. In diesem Ausführungsbeispiel umfasst die Anhängervorsteuereinheit 98 ein erstes elektrisch steuerbares Anhängervorsteuerventil 102 mit einem ersten Anhängervorsteuerventilanschluss 102.1 und einem zweiten Anhängervorsteuerventilanschluss 102.2 sowie ein Anhängerentlüftungsventil 104 mit einem ersten Anhängerentlüftungsventilanschluss 104.1 und einem zweiten Anhängerentlüftungsventilanschluss 104.2. Das Anhängervorsteuerventil ist hier ein monostabiles 2/2-Wege-Ventil mit einer Belüftungsstellung und einer geschlossenen Stellung. In der in Fig. 6 gezeigten geschlossenen Stellung, in die das Anhängervorsteuerventil 102 im stromlosen Zustand vorgespannt ist, sind die beiden Anhängervorsteuerventilanschlüsse 102.1, 102.2 nicht miteinander verbunden. Durch Bereitstellen eines sechsten Schaltsignals S6 kann durch die ECU kann das Anhängervorsteuerventil 102 graduell in die Belüftungsstellung geschaltet werden. Der erste Anhängervorsteuerventilanschluss 102.1 ist unmittelbar mit dem Vorratsanschluss 4 verbunden, sodass an diesem Vorratsdruck pV anliegt. Das Anhängervorsteuerventil 102 steuert dann in Abhängigkeit des sechsten Schaltsignals S6 einen zweiten Anhängervorsteuerdruck pSVA2 aus, der in der Folge über eine Anhängervorsteuerleitung 106 an der Anhängerhauptventileinheit 100 bereitgestellt wird. Das Anhängerentlüftungsventil 104 ist dazu vorgesehen, die Anhängervorsteuerleitung 106 zu entlüften. Im sechsten Ausführungsbeispiel (Fig. 6) ist das Anhängerentlüftungsventil 104 als elektrisch schaltbares monostabiles 2/2-WegeVentil ausgebildet, das in eine offene Stellung vorgespannt ist, in der die beiden Anhängerentlüftungsventilanschlüsse 104.1, 104.2 nicht miteinander verbunden sind. Wenn die ECU ein siebtes Schaltsignals S7 an dem Anhängerentlüftungsventil 104 bereitstellt, schaltet dieses in eine Entlüftungsstellung und verbindet die Anhängervorsteuerleitung 106 über den ersten Anhängerentlüftungsventilanschluss 104.1 und den zweiten Anhängerentlüftungsventilanschluss 104.2 mit der Entlüftung 3.

Die Anhängerhauptventileinheit 100 weist hier nur ein Anhängerrelaisventil 108 auf, das im Wesentlichen analog zum Relaisventil 20 wirkt und einen Anhängerrelaisventil-Vorratsanschluss 108.1, einen Anhängerrelaisventil-Arbeitsanschluss 108.2, einen Anhängerrelaisventil-Entlüftungsanschluss 108.3 und einen Anhängerrelaisventil-Steueranschluss 108.4 aufweist. Der Anhängerrelaisventil-Vorratsanschluss 108.1 ist mit dem Vorratsanschluss 4 verbunden und empfängt Vorratsdruck pV. Der Anhängerrelaisventil-Entlüftungsanschluss 108.3 ist mit der Entlüftung 3 verbunden. Das Anhängerrelaisventil empfängt am Anhängerrelaisventil-Steueranschluss 108.4 den an der Anhängervorsteuerleitung 106 bereitgestellten zweiten Anhängervorsteuerdruck pSVA2 und steuert am Anhängerrelaisventil-Arbeitsanschluss 108.2 volumenverstärkt den korrespondierenden Anhängerbremsdruck pBA aus. Diesen Druck pBA misst ein vierter Drucksensor 109 der im Wesentlichen analog zu den übrigen Drucksensoren 26, 28, 38 ausgebildet ist und ein viertes Drucksignal SD4 an der ECU bereitstellt.

In diesem Ausführungsbeispiel ist ein Anhängersteuerschutzventil 110 zwischen dem Anhängerrelaisventil-Arbeitsanschluss 108.2 und dem Anhängersteueranschluss 96 angeordnet, sodass, der Anhängerbremsdruck pBA nicht unmittelbar vom einen Anhängerrelaisventil-Arbeitsanschluss 108.2 am Anhängersteueranschluss 96 ausgesteuert wird. Vielmehr wird der Anhängerbremsdruck pBA nur dann am Anhängersteueranschluss 96 bereitgestellt, wenn das Anhängersteuerschutzventil 110 in einer Versorgungsstellung ist (in Fig. 6 nicht gezeigt). In der Versorgungsstellung sind ein erster Anhängersteuerschutzventilanschluss 110.1 und ein zweiter Anhängersteuerschutzventilanschluss 110.2 fluidleitend verbunden, sodass der Anhängerbremsdruck pBA durchgesteuert wird. Wenn das Anhängersteuerschutzventil 110 hingegen in der in Fig. 6 gezeigten Schutzstellung ist, werden der Anhängersteueranschluss 96 und der Anhängerrelaisventil-Arbeitsanschluss 108.2 durch das Anhängersteuerschutzventil 110 getrennt. Ein unkontrolliertes Absacken des Anhängerbremsdruck pBA, beispielsweise wenn eine pneumatische Anhängersteuerleitung zum Anhänger abreißt, wird verhindert.

Um das Anhängersteuerschutzventil 110 in die in Fig. 6 nicht gezeigte Versorgungsstellung zu bringen, muss an einem Anhängersteuerschutzventilsteueranschluss 110.3 ein Anhängerschutzdruck pSA bereitgestellt werden. Sobald dieser Anhängerschutzdruck pSA einen vordefinierten Schwellwert überschreitet, schaltet das Anhängersteuerschutzventil 110 und verbindet den Anhängersteueranschluss 96 und den Anhängerrelaisventil-Arbeitsanschluss 108.2, sodass der Anhängerbremsdruck pBA ausgesteuert werden kann.

In dieser Variante der elektropneumatische Ventilanordnung 1 ist der Anhängersteuerschutzventilsteueranschluss 110.3 über eine Anhängerschutzleitung 112 mit dem erster Anhängerschutzventilsteueranschluss 90.4 verbunden, sodass der erste Anhängervorsteuerdruck pSVA1 der Anhängerschutzdruck pSA ist. Hierdurch wird erreicht, dass bei Eintreten eines Druckabfalls am Anhängervorratsanschluss 86 sowohl die Versorgung des Anhängers mit Anhängervorratsdruck pVA am Anhängervorratsanschluss 86 als auch die Versorgung des Anhängers mit Anhängerbetriebsbremsdruck pBA über den Anhängersteueranschluss 96 unterbrochen wird. Das Bremssystem 202 wird so auf einfache Weise geschützt.

Um für den Fall eines elektrischen Fehlers der ECU dennoch einen Anhängersteuerdruck pBA ausgeben zu können, weist die Anhängersteuereinheit 94 ferner ein Redundanzventil 114 auf, das einen ersten Redundanzventilanschluss 114.1 und einen zweiten Redundanzventilanschluss 114.2 hat. Der erste Redundanzventilanschluss 114.1 ist mit einem Redundanzanschluss 116 verbunden, über den ein Redundanzdruck pR an dem ersten Redundanzventilanschluss 114.1 bereitgestellt werden kann. Der Redundanzdruck pR wird in einem Bremssystem 202 (Fig. 7) vorzugsweise von einem Bremswertgeber, wie beispielsweise einem elektronischen Fußbremsmodul 220 (Fig. 7), bereitgestellt.

Im Normalbetrieb ist das Redundanzventil 114 in der in Fig. 6 nicht gezeigten Betriebsstellung, in der der erste Redundanzventilanschluss 114.1 und der zweite Redundanzventilanschluss 114.2 nicht verbunden sind. In dieser Betriebsstellung wird das Redundanzventil 114 gehalten, wenn die ECU ein achtes Schaltsignal S8 an dem Redundanzventil 114 bereitstellt. Wenn das achtes Schaltsignal S8 nicht bereitgestellt wird, beispielsweise wenn das Redundanzventil 114 aufgrund eines elektrischen Fehlers der ECU stromlos ist, dann schaltet das Redundanzventil 114 automatisch in die in Fig. 6 gezeigte Redundanzstellung. In diesem Fall sind typischerweise das Anhängervorsteuerventil 102 und das Anhängerentlüftungsventil 104 offen (in den in Fig. 6 gezeigten Schaltstellungen), sodass der Redundanzdruck pR über eine Redundanzleitung 118 an dem Anhängerrelaisventil-Steueranschluss 108.4 bereitgestellt wird. Das Anhängerrelaisventil 108 steuert dann einen zum Redundanzdruck pR korrespondierenden Anhängerbremsdruck pBA aus.

In diesem Ausführungsbeispiel ist die erste Sicherheitssteuerleitung 66, die zum Sicherheitsventilsteueranschluss 50.4 des Sicherheitsventils führt nicht wie in den vorhergehenden Ausführungsbeispielen mit dem Lösesteueranschluss 76 verbunden, sondern mit einem Anhängerbetriebsbremsanschluss 120. An dem Anhängerbetriebsbremsanschluss 120 wird der Anhängerbremsdruck pBA ausgesteuert, der in dieser Ausgestaltung dann, wenn die Anhängersteuereinheit 94 stromlos ist, ein von dem am Redundanzanschluss 116 bereitgestellten Redundanzdruck pR abgeleiteter Druck ist. Es kann aber vorzugsweise auch vorgesehen sein, dass der Redundanzdruck pR unmittelbar als Betriebsbremsdruck pBB an dem Sicherheitsventilsteueranschluss 50.4 bereitgestellt wird. Der Anhängerbetriebsbremsanschluss 120 ist hier ein interner Anschluss, der mit dem Anhängerrelaisventil-Arbeitsanschluss 108.2 verbunden ist. Es kann aber auch vorgesehen sein, dass der Anhängerbetriebsbremsanschluss 120 ein externer Anschluss ist an dem der Anhängerbremsdruck pBA bereitgestellt wird. Ferner kann auch vorgesehen sein, dass der Sicherheitsventilsteueranschluss 50.4 mit dem Redundanzanschluss 116, der ein Betriebsbremsanschluss 74 sein kann, verbunden ist.

Wenn das Sicherheitsventil 50 in die in Fig. 6 nicht gezeigte Versorgungsstellung 52 gebracht werden soll, muss im sechsten Ausführungsbeispiel über die Anhängersteuereinheit 94 ein Anhängerbremsdruck pBA am Anhängerbetriebsbremsanschluss 120 bereitgestellt werden. In diesem Ausführungsbeispiel bildet die Anhängervorsteuereinheit 98 auch die Sicherheitsschalteinheit 78, wobei der zweite Anhängervorsteuerdruck pSVA2 der Sicherheitsvorsteuerdruck pSSV ist. In Antwort auf diesen Sicherheitsvorsteuerdruck pSSV (den zweiten Anhängervorsteuerdruck pSVA2) steuert das Anhängerrelaisventil 108 den Anhängerbremsdruck pBA aus, der gleichzeitig den Sicherheitssteuerdruck pSS bildet. Auch in diesem Ausführungsbeispiel erfolgt eine Doppelnutzung eines vorhandenen Drucks (des Anhängerbremsdrucks) als Sicherheitssteuerdruck pSS, wodurch eine einfache, kompakte und kostengünstige Bauweise erreicht wird.

Fig. 7 schließlich illustriert das Fahrzeug 200, nämlich das Nutzfahrzeug, mit dem Bremssystem 202, welches hier als elektronisch steuerbares pneumatisches Bremssystem ausgebildet ist. Das Fahrzeug 200 weist eine Vorderachse VA sowie eine Hinterachse HA auf. Ein Zentralmodul 204, welches auch als Hinterachsmodulator ausgebildet ist, bremst die Hinterachse HA, und ein Vorderachsmodulator 206 ist der Vorderachse VA zugeordnet. Das Zentralmodul 204 und der Vorderachsmodulator 206 sind über eine elektronische Leitung 207 miteinander verbunden und tauschen so Signale, wie insbesondere Bremssignale aus. An der Hinterachse HA sind neben ersten und zweiten Federspeicherbremszylindern 208a, 208b auch erste und zweite Betriebsbremszylinder 209a, 209b vorgesehen, die gemeinsam mit den Federspeicherbremszylindern 208a, 208b in sogenannten Tristop-Zylindern untergebracht sein können. An der Vorderachse VA steuert der Vorderachsmodulator 206 entsprechende Bremsdrücke an Vorderachsbetriebsbremszylindern 210a, 210b. Das Fahrzeug weist also zwei Betriebsbremskreise 212 auf: einen Vorderachsbremskreis 214 und einen Hinterachsbremskreis 216. Am Vorderachsbremskreis 214 wird ein Vorderachsbremsdruck pBVA bereitgestellt und am Hinterachsbremskreis wird ein Hinterachsbremsdruck pBHA bereitgestellt. Zum Bereitstellen des Vorderachsbremsdrucks pBVA, der hier zugleich den Betriebsbremsdruck pBB bildet, ist ein Bremsmodul 218 vorgesehen, das in diesem Ausführungsbeispiel ein elektropneumatisches Fußbremsmodul 220 ist. Die Federspeicherbremszylinder 208a, 208b werden über eine Feststellbremsmodul 2 gesteuert, in welchem die elektropneumatische Ventilanordnung 1 gemäß der Erfindung umgesetzt ist. Das Feststellbremsmodul 2 weist den Federspeicheranschluss 21 auf, der wie in Fig. 7 gezeigt mit den Federspeicherbremszylindern 208a, 208b verbunden ist. Der Fahrzeug-BUS 16 verbindet das Feststellbremsmodul 2 mit der Zentraleinheit 204.

### Bezugszeichenliste (Teil der Beschreibung)

- 1: Elektropneumatische Ventilanordnung
- 2: Feststellbremsmodul
- 3: Entlüftung
- 4: Vorratsanschluss
- 5: Vorrats-Wechselventil
- 6: Erster Druckluftvorrat
- 7: Zweiter Druckluftvorrat
- 8: Vorsteuereinheit
- 10: Hauptventileinheit
- 12: Elektromagnetisches Magnetventil
- 12.1: Erster Magnetventilanschluss
- 12.2: Zweiter Magnetventilanschluss
- 12.3: Dritter Magnetventilanschluss
- 12.4: Sicherheitssteueranschluss
- 13.1: Erster Permanentmagnet
- 13.2: Zweiter Permanentmagnet
- 13.3: Erste Spule
- 13.4: Zweite Spule
- 14: Halteventil
- 14.1: Erster Halteventilanschluss
- 14.2: Zweiter Halteventilanschluss
- 16: Fahrzeug-BUS
- 18: Feder
- 20: Relaisventil
- 20.1: Relaisventil-Vorratsanschluss
- 20.2: Relaisventil-Arbeitsanschluss
- 20.3: Relaisventil-Entlüftungsanschluss
- 20.4: Relaisventil-Steueranschluss
- 21: Federspeicheranschluss
- 26: Erster Drucksensor
- 27: Erste Druckmessleitung
- 28: zweiter Drucksensor
- 29: zweite Druckmessleitung
- 32: Lösesteuerpfad
- 33: Löseleitung
- 34: Hauptsteuerwechselventil
- 34.1: erster Hauptsteuerwechselventilanschluss
- 34.2: zweiter Hauptsteuerwechselventilanschluss
- 34.3: dritter Hauptsteuerwechselventilanschluss
- 36: zweite Steuerleitung
- 38: dritter Drucksensor
- 40: dritte Druckmessleitung
- 50: Sicherheitsventil
- 50.1: erster Sicherheitsventilanschluss
- 50.2: zweiter Sicherheitsventilanschluss
- 50.3: dritter Sicherheitsventilanschluss
- 50.4: Sicherheitsventilsteueranschluss
- 50.5: Sicherheitsventilhalteanschluss
- 51: Spannfeder
- 52: Versorgungsstellung
- 54: Entlüftungsstellung
- 56: Versorgungsleitung
- 58: erste Steuerleitung
- 60: Rückführleitung
- 62: Sicherheitsventilhaltekreis
- 64: Feder
- 66: erste Sicherheitssteuerleitung
- 68: Sicherheitswechselventil
- 68.1: erster Sicherheitswechselventilanschluss
- 68.2: zweiter Sicherheitswechselventilanschluss
- 68.3: dritter Sicherheitswechselventilanschluss
- 70: Gehäuse
- 72: zweite Sicherheitssteuerleitung
- 74: Betriebsbremsanschluss
- 76: Lösesteueranschluss
- 78: Sicherheitsschalteinheit
- 79: Sicherheitsschaltventil
- 79.1: erster Sicherheitsschaltanschluss
- 79.2: zweiter Sicherheitsschaltanschluss
- 79.3: dritter Sicherheitsschaltanschluss
- 80: dritte Sicherheitssteuerleitung
- 82: Strichlinie
- 84: Anhängereinheit
- 85: Anhängerversorgungseinheit
- 86: Anhängervorratsanschluss
- 88: Anhängerversorgungsschaltventil
- 88.1: erster Anhängerschaltanschluss
- 88.2: zweiter Anhängerschaltanschluss
- 88.3: dritter Anhängerschaltanschluss
- 90: Anhängerversorgungsschutzventil
- 90.1: erster Anhängerschutzanschluss
- 90.2: zweiter Anhängerschutzanschluss
- 90.3: dritter Anhängerschutzanschluss
- 90.4: erster Anhängerschutzventilsteueranschluss
- 90.5: zweiter Anhängerschutzventilsteueranschluss
- 92: Anhängerversorgungshalteventil
- 92.1: erster Anhängerhalteanschluss
- 92.2: zweiter Anhängerhalteanschluss
- 92.3: dritter Anhängerhalteanschluss
- 94: Anhängersteuereinheit
- 96: Anhängersteueranschluss
- 98: Anhängervorsteuereinheit
- 100: Anhängerhauptventileinheit
- 102: Anhängervorsteuerventil
- 102.1: erster Anhängervorsteuerventilanschluss
- 102.2: zweiter Anhängervorsteuerventilanschluss
- 104: Anhängerentlüftungsventil
- 104.1: erster Anhängerentlüftungsventilanschluss
- 104.2: zweiter Anhängerentlüftungsventilanschluss
- 106: Anhängervorsteuerleitung
- 108: Anhängerrelaisventil
- 108.1: Anhängerrelaisventil-Vorratsanschluss
- 108.2: Anhängerrelaisventil-Arbeitsanschluss
- 108.3: Anhängerrelaisventil-Entlüftungsanschluss
- 108.4: Anhängerrelaisventil-Steueranschluss
- 109: vierter Drucksensor
- 110: Anhängersteuerschutzventil
- 110.1: erster Anhängersteuerschutzventilanschluss
- 110.2: zweiter Anhängersteuerschutzventilanschluss
- 110.3: Anhängersteuerschutzventilsteueranschluss
- 112: Anhängerschutzleitung
- 114: Redundanzventil
- 114.1: erster Redundanzventilanschluss
- 114.2: zweiter Redundanzventilanschluss
- 116: Redundanzanschluss
- 118: Redundanzleitung
- 120: Anhängerbetriebsbremsanschluss
- 200: Fahrzeug
- 201: Nutzfahrzeug
- 202: Bremssystem
- 204: Zentralmodul
- 206: Vorderachsmodulator
- 208a, 208b: Federspeicherbremszylinder
- 209a, 209b: Betriebsbremszylinder an der Hinterachse
- 210a, 210b: Betriebsbremszylinder an der Vorderachse
- 212: Betriebsbremskreis
- 214: Vorderachsbremskreis
- 216: Hinterachsbremskreis
- 218: Bremsmodul
- 220: elektropneumatisches Fußbremsmodul
- ECU: Elektronische Steuereinheit
- pA: ausgesteuerter Druck
- pBA: Anhängerbremsdruck
- pBB: Betriebsbremsdruck
- pBP: Parkbremsdruck
- pBHA: Hinterachsbremsdruck
- pBVA: Voderachsbremsdruck
- pL: Lösesteuerdruck
- pR: Redundanzdruck
- pSA: Anhängerschutzdruck
- pSS: Sicherheitssteuerdruck
- pSSV: Sicherheitsvorsteuerdruck
- pSV: Vorsteuerdruck
- pSVA1: erster Anhängervorsteuerdruck
- pSVA2: zweiter Anhängervorsteuerdruck
- pV: Vorratsdruck
- pVA: Anhängervorratsdruck
- SD1: erstes Drucksignal
- SD2: zweites Drucksignal
- SD3: drittes Drucksignal
- SFB: Feststellbremssignal
- SSS: Sicherheitsschaltsignal
- S1: erstes Schaltsignal
- S2: zweites Schaltsignal
- S3: drittes Schaltsignal
- S4: viertes Schaltsignal
- S5: fünftes Schaltsignal
- S6: sechstes Schaltsignal
- S7: siebtes Schaltsignal
- S8: achtes Schaltsignal

## Patentansprüche

1. Elektropneumatische Ventilanordnung (1) zur Betätigung einer Feststellbremsfunktion eines elektropneumatischen Bremssystems (202) eines Nutzfahrzeugs (201), mit
einer Vorsteuereinheit (8), die in Abhängigkeit von einem elektronischen Feststellbremssignal (SFB) einen Vorsteuerdruck (pSV) aussteuert; und
einer Hauptventileinheit (10), die dazu angepasst ist, den Vorsteuerdruck (pSV) zu empfangen und einen Parkbremsdruck (pBP) an wenigsten einem Federspeicheranschluss (21) auszusteuern;
aufweisend ein pneumatisch schaltbares selbsthaltendes Sicherheitsventil (50), welches der Vorsteuereinheit (8) vorgeschaltet ist und einen Sicherheitsventilsteueranschluss (50.4) zum Empfangen eines Sicherheitssteuerdrucks (pSS) sowie einen Sicherheitsventilhaltekreis (62) zum Empfangen eines von dem Sicherheitsventil (50) ausgesteuerten Drucks (pA) oder eines davon abgeleiteten Drucks aufweist,
wobei das Sicherheitsventil (50) durch Empfangen des
Sicherheitssteuerdrucks (pSS) von einer Entlüftungsstellung (54), in der das Sicherheitsventil (50) die Vorsteuereinheit (8) mit einer Entlüftung (3) verbindet, in eine Versorgungsstellung (52) schaltbar ist, in der das Sicherheitsventil (50) die Vorsteuereinheit (8) mit Vorratsdruck (pV) versorgt,
wobei das Sicherheitsventil (50) in Abhängigkeit vom am Sicherheitsventilhaltekreis (62) empfangenen ausgesteuerten Druck (pA) in der Versorgungsstellung (52) verbleibt oder in die Entlüftungsstellung (54) schaltet, und
eine elektropneumatische Sicherheitsschalteinheit (78), die in Abhängigkeit von einem elektronischen Sicherheitsschaltsignal (SSS) einen Sicherheitsvorsteuerdruck (pSSV) aussteuert,
**gekennzeichnet durch** einen Betriebsbremsanschluss (74) zum Empfangen eines Betriebsbremsdrucks (pBB), wobei der Betriebsbremsanschluss (74) unmittelbar oder mittelbar fluidleitend mit dem Sicherheitsventilsteueranschluss (50.4) verbunden ist, und
ein Sicherheitswechselventil (68), das dazu ausgebildet ist, den Sicherheitsvorsteuerdruck (pSSV) und den Betriebsbremsdruck (pBB) zu empfangen und den höheren Druck des Sicherheitsvorsteuerdrucks (pSSV) und des Betriebsbremsdrucks (pBB) als Sicherheitssteuerdruck (pSS) auszusteuern.

2. Elektropneumatische Ventilanordnung (1) nach Anspruch 1, wobei der Betriebsbremsanschluss (74) mit einem Vorderachsbremskreis (214) und/oder einem Hinterachsbremskreis (216) verbindbar ist, wobei der Betriebsbremsdruck (pBB) ein Vorderachsbremsdruck (pBVA) und/oder ein Hinterachsbremsdruck (PBHA) des Nutzfahrzeugs (201) ist.

3. Elektropneumatische Ventilanordnung (1) nach Anspruch 2, wobei der Betriebsbremsanschluss (74) ein Lösesteueranschluss (76) ist, und wobei der Betriebsbremsdruck (pBB) ein Lösesteuerdruck (pL) ist.

4. Elektropneumatische Ventilanordnung (1) nach Anspruch 2, ferner aufweisend ein Hauptsteuerwechselventil (34), das dazu ausgebildet ist, den Vorsteuerdruck (pSV) und den Lösesteuerdruck (pL) zu empfangen und den höheren des Vorsteuerdrucks (pSV) und Lösesteuerdrucks (pL) für die Hauptventileinheit (10) bereitzustellen, wobei die Hauptventileinheit (10) in Abhängigkeit des Lösesteuerdrucks (pL) oder des Vorsteuerdrucks (pSV) den Parkbremsdruck (pBP) aussteuert.

5. Elektropneumatische Ventilanordnung (1) nach Anspruch 1, wobei der Betriebsbremsanschluss (74) ein Redundanzanschluss (116) ist, und wobei der Betriebsbremsdruck (pBB) ein Redundanzbremsdruck (pR) oder ein von dem Redundanzbremsdruck (pR) abgeleiteter Druck ist

6. Elektropneumatische Ventilanordnung (1) nach Anspruch 1 oder 5, wobei der Betriebsbremsanschluss (74) ein Anhängerbetriebsbremsanschluss (120) ist, und wobei der Betriebsbremsdruck (pBB) ein Anhängerbremsdruck (pBA) ist.

7. Elektropneumatische Ventilanordnung (1) nach Anspruch 1, wobei die Sicherheitsschalteinheit (78) zum Empfangen eines Vorratsdrucks (pV) und in einer ersten Schaltstellung zum Aussteuern des Vorratsdrucks (pV) als Sicherheitsvorsteuerdruck (pSSV) ausgebildet ist.

8. Elektropneumatische Ventilanordnung (1) nach Anspruch 7, wobei die Sicherheitsschalteinheit (78) in einer zweiten Schaltstellung das Sicherheitswechselventil (68) mit einer Entlüftung (3) verbindet.

9. Elektropneumatische Ventilanordnung (1) nach einem der vorstehenden Ansprüche, wobei das Sicherheitsventil (50) in der Versorgungsstellung (52) verbleibt, wenn der am Sicherheitsventilhaltekreis (62) anliegende ausgesteuerten Drucks (pA) einen ersten Schwellwert überschreitet, und wobei das Sicherheitsventil in die Entlüftungsstellung (54) schaltet, wenn der am Sicherheitsventilhaltekreis (62) anliegende ausgesteuerte Druck (pA) den ersten Schwellwert erreicht oder unterschreitet.

10. Elektropneumatische Ventilanordnung (1) nach Anspruch 9, wobei der erste Schwellwert in einem Bereich von 200 kPa bis 350 kPa, vorzugsweise 250 kPa bis 315 kPa liegt.

11. Elektropneumatische Ventilanordnung (1) nach einem der vorstehenden Ansprüche, wobei das Sicherheitsventil (50) eine Spannfeder (51) aufweist, die das Sicherheitsventil (50) in die Entlüftungsstellung (54) vorspannt.

12. Elektropneumatische Ventilanordnung (1) nach einem der vorstehenden Ansprüche, wobei die Vorsteuereinheit (8) eine bistabile Vorsteuereinheit ist.

13. Elektropneumatische Ventilanordnung (1) nach Anspruch 12, wobei die bistabile Vorsteuereinheit (8) ein bistabiles elektromagnetisches Magnetventil (12) mit wenigstens einem ersten Permanentmagneten (13.1) aufweist.

14. Elektropneumatisches Bremssystem, aufweisend
eine Elektropneumatische Ventilanordnung (1) nach einem der vorstehenden Ansprüche 1 bis 13, und einen Betriebsbremskreis (212) mit einem Bremsmodul (218) zum Bereitstellen des Betriebsbremsdrucks (pBB), wobei das Bremsmodul (218) fluidleitend mit dem Betriebsbremsanschluss (74) der elektropneumatischen Ventilanordnung (1) verbunden ist.

15. Verfahren zum Steuern einer Parkbremsfunktion eines Fahrzeugs (200), insbesondere Nutzfahrzeugs (201), mit einem elektropneumatischen Bremssystem (202) nach Anspruch 14, mit den Schritten:
- pneumatisches Schalten des Sicherheitsventils (50) in eine Versorgungsstellung (52), in der das Sicherheitsventil (50) die Vorsteuereinheit (8) mit Vorratsdruck (pV) versorgt, durch Bereitstellen eines Sicherheitssteuerdrucks (pSS) an dem Sicherheitsventilsteueranschluss (50.4);
- Empfangen des Vorratsdrucks (pV) an der Vorsteuereinheit (8) und Aussteuern eines Vorsteuerdrucks (pSV) durch die Vorsteuereinheit (8) in Abhängigkeit von einem elektronischen Feststellbremssignal (SFB);
- Bereitstellen eines Betriebsbremsdrucks (pBB) durch das Bremsmodul (218) des Betriebsbremskreises (212);
- Aussteuern eines Parkbremsdrucks (pBP) an dem wenigstens einen Federspeicheranschluss (21) in Abhängigkeit von dem Betriebsbremsdruck (pBB) oder von dem Vorsteuerdruck (pSV) durch die Hauptventileinheit (10);
wobei der Sicherheitssteuerdruck (pSS) der Betriebsbremsdruck (pBB) oder ein Vorratsdruck (pV) ist, der durch elektromagnetisches Öffnen der Sicherheitsschalteinheit (78) an dem Sicherheitsventilsteueranschluss (50.4) bereitgestellt wird,
- Aussteuern eines Sicherheitsvorsteuerdrucks (pSSV) an der elektropneumatischen Sicherheitsschalteinheit (78) in Abhängigkeit von einem elektronischen Sicherheitsschaltsignal (SSS); und
- Empfangen des Sicherheitsvorsteuerdrucks (pSSV) und des Betriebsbremsdrucks (pBB) an dem Sicherheitswechselventil (68) und Aussteuern des höheren Drucks des Sicherheitsvorsteuerdrucks (pSSV) und des Betriebsbremsdrucks (pBB) als Sicherheitssteuerdruck (pSS) mittels des Sicherheitswechselventils (68).

16. Fahrzeug (200), insbesondere Nutzfahrzeug (201), mit einem elektropneumatischen Bremssystem (202) nach Anspruch 14.

## Claims

1. Electropneumatic valve assembly (1) for actuating a parking brake function of an electropneumatic brake system (202) of a commercial vehicle (201), having
a pilot control unit (8) which controls a pilot control pressure (pSV) in response to an electronic parking brake signal (SFB); and
a main valve unit (10) adapted to receive the pilot control pressure (pSV) and to control a parking brake pressure (pBP) at at least one spring-loaded connection (21);
comprising a pneumatically switchable self-holding safety valve (50) which is connected upstream of the pilot control unit (8) and has a safety valve control connection (50.4) for receiving a safety control pressure (pSS) and a safety valve holding circuit (62) for receiving a pressure (pA) controlled by the safety valve (50) or a pressure derived therefrom,
the safety valve (50), by receiving the safety control pressure (pSS), being switchable from a venting position (54), in which the safety valve (50) connects the pilot control unit (8) to a vent (3), into a supply position (52), in which the safety valve (50) supplies the pilot control unit (8) with supply pressure (pV),
the safety valve (50) remaining in the supply position (52) or switching to the venting position (54) depending on the controlled pressure (pA) received at the safety valve holding circuit (62), and
an electropneumatic safety switching unit (78) which controls a safety pilot control pressure (pSSV) in response to an electronic safety switching signal (SSS),
**characterized by** a service brake connection (74) for receiving a service brake pressure (pBB), the service brake connection (74) being directly or indirectly fluidically connected to the safety valve control connection (50.4), and
a safety two-way valve (68) which is designed to receive the safety pilot control pressure (pSSV) and the service brake pressure (pBB) and to control the higher pressure of the safety pilot control pressure (pSSV) and the service brake pressure (pBB) as the safety control pressure (pSS).

2. Electropneumatic valve assembly (1) according to claim 1, wherein the service brake connection (74) is connectable to a front axle brake circuit (214) and/or a rear axle brake circuit (216), wherein the service brake pressure (pBB) is a front axle brake pressure (pBVA) and/or a rear axle brake pressure (PBHA) of the commercial vehicle (201).

3. Electropneumatic valve assembly (1) according to claim 2, wherein the service brake connection (74) is a release control connection (76), and wherein the service brake pressure (pBB) is a release control pressure (pL).

4. Electropneumatic valve assembly (1) according to claim 2, further comprising a main control two-way valve (34) which is designed to receive the pilot control pressure (pSV) and the release control pressure (pL) and to provide the higher of the pilot control pressure (pSV) and release control pressure (pL) to the main valve unit (10), wherein the main valve unit (10) controls the parking brake pressure (pBP) depending on the release control pressure (pL) or the pilot control pressure (pSV).

5. Electropneumatic valve assembly (1) according to claim 1, wherein the service brake connection (74) is a redundancy connection (116), and wherein the service brake pressure (pBB) is a redundancy brake pressure (pR) or a pressure derived from the redundancy brake pressure (pR)

6. Electropneumatic valve assembly (1) according to claim 1 or 5, wherein the service brake connection (74) is a trailer service brake connection (120), and wherein the service brake pressure (pBB) is a trailer brake pressure (pBA).

7. Electropneumatic valve assembly (1) according to claim 1, wherein the safety switching unit (78) is designed to receive a supply pressure (pV) and, in a first switching position, to control the supply pressure (pV) as a safety pilot control pressure (pSSV).

8. Electropneumatic valve assembly (1) according to claim 7, wherein the safety switching unit (78) connects the safety two-way valve (68) to a vent (3) in a second switching position.

9. Electropneumatic valve assembly (1) according to any of the preceding claims, wherein the safety valve (50) remains in the supply position (52) when the controlled pressure (pA) applied to the safety valve holding circuit (62) exceeds a first threshold value, and wherein the safety valve switches to the venting position (54) when the controlled pressure (pA) applied to the safety valve holding circuit (62) reaches or falls below the first threshold value.

10. Electropneumatic valve assembly (1) according to claim 9, wherein the first threshold value is in a range from 200 kPa to 350 kPa, preferably 250 kPa to 315 kPa.

11. Electropneumatic valve assembly (1) according to any of the preceding claims, wherein the safety valve (50) has a tension spring (51) which preloads the safety valve (50) into the venting position (54).

12. Electropneumatic valve assembly (1) according to any of the preceding claims, wherein the pilot control unit (8) is a bistable pilot control unit.

13. Electropneumatic valve assembly (1) according to claim 12, wherein the bistable pilot control unit (8) comprises a bistable electromagnetic solenoid valve (12) having at least a first permanent magnet (13.1).

14. Electropneumatic brake system, comprising
an electropneumatic valve assembly (1) according to any of the preceding claims 1 to 13, and a service brake circuit (212) having a brake module (218) for providing the service brake pressure (pBB), wherein the brake module (218) is fluidly connected to the service brake connection (74) of the electropneumatic valve assembly (1).

15. Method for controlling a parking brake function of a vehicle (200), in particular a commercial vehicle (201), having an electropneumatic brake system (202) according to claim 14, comprising the steps:
- pneumatically switching the safety valve (50) into a supply position (52), in which the safety valve (50) supplies the pilot control unit (8) with supply pressure (pV), by providing a safety control pressure (pSS) at the safety valve control connection (50.4);
- receiving the supply pressure (pV) at the pilot control unit (8) and controlling a pilot control pressure (pSV) by the pilot control unit (8) in response to an electronic parking brake signal (SFB);
- providing a service brake pressure (pBB) by means of the brake module (218) of the service brake circuit (212);
- controlling a parking brake pressure (pBP) at the at least one springloaded connection (21) depending on the service brake pressure (pBB) or the pilot control pressure (pSV) by the main valve unit (10);
wherein the safety control pressure (pSS) is the service brake pressure (pBB) or a supply pressure (pV) provided by electromagnetic opening of the safety switching unit (78) at the safety valve control connection (50.4),
- controlling a safety pilot control pressure (pSSV) at the electropneumatic safety switching unit (78) in response to an electronic safety switching signal (SSS); and
- receiving the safety pilot control pressure (pSSV) and the service brake pressure (pBB) at the safety two-way valve (68) and controlling the higher pressure of the safety pilot control pressure (pSSV) and the service brake pressure (pBB) as the safety control pressure (pSS) by means of the safety two-way valve (68).

16. Vehicle (200), in particular a commercial vehicle (201), comprising an electropneumatic brake system (202) according to claim 14.

## Revendications

1. Agencement de soupapes électropneumatique (1) permettant d'actionner une fonction de frein de stationnement d'un système de freinage électropneumatique (202) d'un véhicule utilitaire (201), comportant
une unité de commande pilote (8) qui commande une pression pilote (pSV) en fonction d'un signal électronique de frein de stationnement (SFB) ; et
une unité de soupape principale (10) qui est adaptée pour recevoir la pression pilote (pSV) et pour commander une pression de frein de stationnement (pBP) au niveau d'au moins un raccord d'accumulateur à ressort (21) ;
présentant une soupape de sécurité (50) à verrouillage automatique pouvant commuter de manière pneumatique, laquelle est montée en amont de l'unité de commande pilote (8) et présente un raccord de commande de soupape de sécurité (50.4) pour la réception d'une pression de commande de sécurité (pSS) ainsi qu'un circuit de verrouillage de soupape de sécurité (62) pour la réception d'une pression (pA) commandée par la soupape de sécurité (50) ou d'une pression qui en est dérivée,
dans lequel, en recevant la pression de commande de sécurité (pSS), la soupape de sécurité (50) peut être commutée d'une position de purge (54), dans laquelle la soupape de sécurité (50) relie l'unité de commande pilote (8) à un moyen de purge (3), à une position d'alimentation (52), dans laquelle la soupape de sécurité (50) alimente l'unité de commande pilote (8) avec une pression de réserve (pV),
dans lequel la soupape de sécurité (50) reste dans la position d'alimentation (52) ou commute vers la position de purge (54) en fonction de la pression (pA) commandée reçue au niveau du circuit de verrouillage de soupape de sécurité (62), et
une unité de commutation de sécurité (78) électropneumatique qui commande une pression pilote de sécurité (pSSV) en fonction d'un signal de commutation de sécurité électronique (SSS),
**caractérisé par** un raccord de frein de service (74) pour la réception d'une pression de frein de service (pBB), dans lequel le raccord de frein de service (74) est relié directement ou indirectement d'une manière conductrice de fluide au raccord de commande de soupape de sécurité (50.4), et
une soupape de sécurité à deux voies (68) qui est conçue pour recevoir la pression pilote de sécurité (pSSV) et la pression de frein de service (pBB) et pour commander la pression la plus élevée parmi la pression pilote de sécurité (pSSV) et la pression de frein de service (pBB) comme pression pilote de sécurité (pSS).

2. Agencement de soupapes électropneumatique (1) selon la revendication 1, dans lequel le raccord de frein de service (74) peut être relié à un circuit de frein d'essieu avant (214) et/ou à un circuit de frein d'essieu arrière (216), dans lequel la pression de frein de service (pBB) est une pression de frein d'essieu avant (pBVA) et/ou une pression de frein d'essieu arrière (PBHA) du véhicule utilitaire (201).

3. Agencement de soupapes électropneumatique (1) selon la revendication 2, dans lequel le raccord de frein de service (74) est un raccord de commande de desserrage (76), et dans lequel la pression de frein de service (pBB) est une pression de commande de desserrage (pL).

4. Agencement de soupapes électropneumatique (1) selon la revendication 2, présentant en outre une soupape de commande principale à deux voies (34) qui est conçue pour recevoir la pression pilote (pSV) et la pression de commande de desserrage (pL) et pour fournir la pression la plus élevée parmi la pression pilote (pSV) et la pression de commande de desserrage (pL) à l'unité de soupape principale (10), dans lequel l'unité de soupape principale (10) commande la pression de frein de stationnement (pBP) en fonction de la pression de commande de desserrage (pL) ou de la pression pilote (pSV).

5. Agencement de soupapes électropneumatique (1) selon la revendication 1, dans lequel le raccord de frein de service (74) est un raccord de redondance (116), et dans lequel la pression de frein de service (pBB) est une pression de frein de redondance (pR) ou une pression dérivée de la pression de frein de redondance (pR).

6. Agencement de soupapes électropneumatique (1) selon la revendication 1 ou 5, dans lequel le raccord de frein de service (74) est un raccord de frein de service de remorque (120), et dans lequel la pression de frein de service (pBB) est une pression de frein de remorque (pBA).

7. Agencement de soupapes électropneumatique (1) selon la revendication 1, dans lequel l'unité de commutation de sécurité (78) est conçue pour recevoir une pression de réserve (pV) et, dans une première position de commutation, pour commander la pression de réserve (pV) comme pression pilote de sécurité (pSSV).

8. Agencement de soupapes électropneumatique (1) selon la revendication 7, dans lequel l'unité de commutation de sécurité (78) relie, dans une seconde position de commutation, la soupape de sécurité à deux voies (68) à un moyen de purge (3).

9. Agencement de soupapes électropneumatique (1) selon l'une des revendications précédentes, dans lequel la soupape de sécurité (50) reste dans la position d'alimentation (52) lorsque la pression (pA) commandée appliquée au circuit de verrouillage de soupape de sécurité (62) dépasse une première valeur seuil, et dans lequel la soupape de sécurité commute vers la position de purge (54) lorsque la pression (pA) commandée appliquée au circuit de verrouillage de soupape de sécurité (62) atteint ou passe en dessous de la première valeur seuil.

10. Agencement de soupapes électropneumatique (1) selon la revendication 9, dans lequel la première valeur seuil se situe dans une plage allant de 200 kPa à 350 kPa, de préférence de 250 kPa à 315 kPa.

11. Agencement de soupapes électropneumatique (1) selon l'une des revendications précédentes, dans lequel la soupape de sécurité (50) présente un ressort tendeur (51) qui précontraint la soupape de sécurité (50) dans la position de purge (54).

12. Agencement de soupapes électropneumatique (1) selon l'une des revendications précédentes, dans lequel l'unité pilote (8) est une unité pilote bistable.

13. Agencement de soupapes électropneumatique (1) selon la revendication 12, dans lequel l'unité pilote bistable (8) présente une électrovanne (12) électromagnétique bistable comportant au moins un premier aimant permanent (13.1).

14. Système de freinage électropneumatique, présentant
un agencement de soupapes électropneumatique (1) selon l'une des revendications 1 à 13 précédentes, et un circuit de frein de service (212) comportant un module de frein (218) pour la fourniture de la pression de frein de service (pBB), dans lequel le module de frein (218) est relié d'une manière conductrice de fluide au raccord de frein de service (74) de l'agencement de soupapes électropneumatique (1).

15. Procédé pour la commande d'une fonction de frein de stationnement d'un véhicule (200), en particulier d'un véhicule utilitaire (201), comportant un système de freinage électropneumatique (202) selon la revendication 14, comportant les étapes consistant à :
- commuter de manière pneumatique la soupape de sécurité (50) dans une position d'alimentation (52) dans laquelle la soupape de sécurité (50) alimente l'unité pilote (8) avec une pression de réserve (pV), en fournissant une pression de commande de sécurité (pSS) au niveau du raccord de commande de soupape de sécurité (50.4) ;
- recevoir la pression de réserve (pV) au niveau de l'unité pilote (8) et commander une pression pilote (pSV) par l'unité pilote (8) en fonction d'un signal électronique de frein de stationnement (SFB) ;
- fournir une pression de frein de service (pBB) par le module de frein (218) du circuit de frein de service (212) ;
- commander une pression de frein de stationnement (pBP) au niveau de l'au moins un raccord d'accumulateur à ressort (21) en fonction de la pression de frein de service (pBB) ou de la pression pilote (pSV) par l'unité de soupape principale (10) ;
dans lequel la pression de commande de sécurité (pSS) est la pression de frein de service (pBB) ou une pression de réserve (pV) fournie par l'ouverture électromagnétique de l'unité de commutation de sécurité (78) au niveau du raccord de commande de soupape de sécurité (50.4),
- commander une pression pilote de sécurité (pSSV) au niveau de l'unité de commutation de sécurité (78) électropneumatique en fonction d'un signal de commutation de sécurité (SSS) électronique ; et
- recevoir la pression pilote de sécurité (pSSV) et la pression de frein de service (pBB) au niveau de la soupape de sécurité à deux voies (68) et commander la pression la plus élevée parmi la pression pilote de sécurité (pSSV) et la pression de frein de service (pBB) en tant que pression pilote de sécurité (pSS) au moyen de la soupape de sécurité à deux voies (68).

16. Véhicule (200), en particulier véhicule utilitaire (201), comportant un système de freinage électropneumatique (202) selon la revendication 14.
